# EUROPÄISCHE PATENTSCHRIFT

(11) **EP 4 107 198 B1**
(45) Veröffentlichungstag und Bekanntmachung des Hinweises auf die Patenterteilung: **13.03.2024**
(21) Anmeldenummer: 21704281.1
(22) Anmeldetag: 11.02.2021
(51) Int. Cl.: C08G 18/02, C08G 18/08, C08G 18/73, C08G 18/76, C08G 18/79

(54) **POLYISOCYANATZUBEREITUNGEN**
POLYISOCYANATE PREPARATIONS
PRÉPARATIONS DE POLYISOCYANATE

(30) Priorität: 17.02.2020 EP 20157573; 18.09.2020 EP 20197008
(43) Veröffentlichungstag der Anmeldung: 28.12.2022
(73) Patentinhaber: Covestro Deutschland AG, 51373 Leverkusen (DE)
(72) Erfinder: LAAS, Hans-Josef, 51519 Odenthal (DE); TEJADA ROSALES, Eva, 08100 Mollet del Valles (ES)
(74) Vertreter: Levpat
(86) Internationale Anmeldenummer: PCT/EP2021/053264
(87) Internationale Veröffentlichungsnummer: WO 2021/165125

(56) Entgegenhaltungen:
- WO-A1-01/88006

## Beschreibung

Die Erfindung betrifft lösemittelhaltige Polyisocyanatzubereitungen und die Verwendung dieser Zubereitungen zur Herstellung von Polyurethankunststoffen. Außerdem betrifft die Erfindung Beschichtungsmittel enthaltend die Polyisocyanatzubereitungen sowie die mit diesen Beschichtungsmitteln beschichteten Substrate.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan-Lacke (2K-PUR-Lacke) ermöglichen, die bezüglich mechanischer und chemischer Beständigkeit lösemittelhaltigen Lacken durchaus vergleichbar und teilweise sogar überlegen sind.

Die hydrophil-modifizierten Polyisocyanatvernetzer können dabei grundsätzlich in lösemittelfreier Form eingesetzt werden. In der Regel werden sie jedoch vor der Anwendung zur Viskositätserniedrigung und Erleichterung des Einrührbarkeit in die wässrige Bindemittelkomponente mit organischen Lösemitteln verdünnt. Dabei handelt es sich zumeist um die üblichen, gegenüber Isocyanatgruppen chemisch inerten Lacklösemittel, wie sie beispielsweise in EP-A 0 540 985 oder WO 2001/88006 beschrieben sind. Daneben wurden aber auch Acetale (WO 2007/110425), Dioxolan (WO 2017/042111) oder auch spezielle fluorierte Lösemittel (WO 2008/042325) als Colöser für hydrophil modifizierte Polyisocyanate vorgeschlagen, die zu besonders feinteiligen Dispersionen und damit zu einem erhöhten Glanz der erhältlichen Beschichtungen führen sollen.

Bei der Herstellung von Vernetzerlösungen aus hydrophilen Polyisocyanaten, die ionische Emulgatoren enthalten, wird in der Praxis häufig beobachtet, dass unter Verwendung verschiedener Chargen ein und desselben Lösemittels Lösungen erhalten werden, die sich bezüglich ihrer Eigenfarbe merklich unterscheiden, ein Effekt, der im Sinne einer konstanten Produktqualität unerwünscht ist. In Abhängigkeit von der Qualität der eingesetzten Lösemittel können organische Lösungen ionisch hydrophilierter Polyisocyanate sogar bereits nach kurzer Lagerzeit derart hohe Farbzahlen erreichen, dass ihre Verwendbarkeit als Vernetzer für hochwertige Lacksysteme erheblich eingeschränkt oder ausgeschlossen ist.

Aufgabe der vorliegenden Erfindung war es daher, neue Vernetzerlösungen auf Basis ionische Emulgatoren enthaltender Polyisocyanate zur Verfügung zu stellen, die sich reproduzierbar mit niedrigen Farbzahlen herstellen lassen und die auch nach längerer Lagerung beispielsweise auch bei erhöhter Temperatur weitgehend farbstabil verhalten.

Diese Aufgabe konnte mit der Bereitstellung der nachstehend näher beschriebenen erfindungsgemäßen Polyisocyanatzubereitungen bzw. des Verfahrens zu ihrer Herstellung gelöst werden. Die nachstehend näher beschriebenen erfindungsgemäßen Polyisocyanatzubereitungen basieren auf der überraschenden Beobachtung, dass die Farbe organischer Lösungen ionisch hydrophilierter Polyisocyanate in hohem Maße mit dem Peroxidgehalt der verwendeten Lösemittel korreliert. Während Polyisocyanatlösungen, die unter Verwendung von Lösemitteln mit Peroxidgehalten von mehr als 70 mg/l H₂O₂-Äquivalenten hergestellt wurden, sich bereits nach kurzer Lagerung, zum Teil bereits bei Raumtemperatur, deutlich verfärben, ergibt die Verwendung von Lösemitteln mit Peroxidgehalten von höchstens 70, bevorzugt von höchstens 60 und besonders bevorzugt von höchstens 50 mg/l H₂O₂-Äquivalente reproduzierbar farbstabile Lösungen.

Dies war überraschend, da dem Fachmann bekannt ist, dass sich oxidativ, beispielsweise durch Zusatz von Peroxiden (EP-A 0 377 177) oder Peroxycarbonsäuren (EP-A 0 630 928) oder durch eine Behandlung mit elementarem Sauerstoff (EP-A 0 569 804) die Farbzahlen von Polyisocyanaten deutlichen absenken lassen.

Gegenstand der vorliegenden Erfindung sind Polyisocyanatzubereitungen, enthaltend mindestens eine, mit mindestens einem ionischen Emulgator hydrophil modifizierte Polyisocyanatkomponente A) und eine Lösemittelkomponente E), die aus mindestens einem organischen Lösemittel besteht, dadurch gekennzeichnet, dass die Lösemittelkomponente E) einen Gehalt an Peroxiden von höchstens 70 mg/l H₂O₂-Äquivalenten, bevorzugt von höchstens 60 mg/l H₂O₂-Äquivalenten, besonders bevorzugt von höchstens 50 mg/l H₂O₂-Äquivalenten aufweist, wobei es sich bei diesem Wert um den mittleren Peroxidgehalt aller in der Lösemittelkomponente E) vorliegenden organischen Lösemittel handelt, und die Polyisocyanatkomponente A) und die Lösemittelkomponente E) in solchen Mengen vorliegen, dass der berechnete Peroxid-Gehalt der Polyisocyanatzubereitung, bezogen auf die Summe aus A) und E), höchstens 20 mg/l H₂O₂-Äquivalente beträgt.

Gegenstand der Erfindung ist auch die Verwendung dieser Polyisocyanatzubereitungen bei der Herstellung von Polyurethankunststoffen, insbesondere als Vernetzer für wasserlösliche oder dispergierbare Lackbindemittel oder -bindemittelkomponenten mit gegenüber Isocyanatgruppen reaktionsfähigen Gruppen.

Vorliegend ist unter dem Begriff H₂O₂-Äquivalenten (nachfolgend auch mit "H₂O₂" abgekürzt) ein Sammelbegriff verschiedenster Verbindungen zu verstehen, die alle wenigstens eine Peroxidgruppe aufweisen. So umfasst der Begriff "H₂O₂-Äquivalent" neben Wasserstoffperoxid selbst auch beliebige Verbindungen, die mindestens eine Peroxidgruppe aufweisen, beispielsweise organische Peroxide und Hydroperoxide. Die Begriffe "Gehalt an Peroxiden", "Peroxid-Gehalt" und "Peroxidgehalt" werden im Rahmen der vorliegenden Erfindung als Synonyme für den Begriff "H₂O₂-Äquivalente" verwendet.

Die in den erfindungsgemäßen Polyisocyanatzubereitungen enthaltenen hydrophil modifizierten Polyisocyanatkomponenten A) bestehen aus einer Polyisocyanatkomponente B) sowie mindestens einem ionischen Emulgator C).

Geeignete Polyisocyanatkomponenten B) sind beispielsweise beliebige Diisocyanate und/oder Triisocyanate mit aliphatisch, cycloaliphatisch, araliphatisch und/oder aromatisch gebundenen Isocyanatgruppen, die auf verschiedene Weise, beispielsweise durch Phosgenierung entsprechender Diamine oder Triamine in der Flüssig- oder Gasphase oder auf phosgenfreien Weg, wie z. B. durch thermische Urethanspaltung, zugänglich sind.

Geeignet sind beispielsweise einfache monomere Diisocyanate und Triisocyanate mit aliphatisch und/oder cycloaliphatisch gebundenen Isocyanatgruppen, vorzugsweise solche des Molekulargewichtsbereichs 140 bis 400, wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)isocyanato-methylcyclohexan, Bis-(isocyanatomethyl)-norbornan, 1,8-Diisocyanato-4-(isocyanatomethyl)octan (Triisocyanatononan, TIN), 2-Isocyanatoethyl-2,6-diisocyanatohexanoat (Lysinestertriisocyanat, LTI) oder monomere Diisocyanate und Triisocyanate mit araliphatisch und/oder aromatisch gebundenen Isocyanatgruppen, vorzugsweise solche des Molekulargewichtsbereichs 160 bis 600, wie z. B. 1,3- und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (Toluylendiisocyanat, TDI), 2,3,5,6-Tetramethyl-1,4-diisocyanatobenzol, die isomeren Diethylphenylendiisocyanate, Diisopropylphenylendiisocyanate, Diisododecylpehnylendiisocyanate und Biphenyldiisocyanate, 3,3'-Dimethoxybiphenyl-4,4'-diisocyanat, 2,2`-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Ebenfalls geeignete Polyisocyanatkomponenten B) sind darüber hinaus die als "Polymer-MDI" bekannten mehrkernigen homologen des Diisocyanatodiphenylmethans.

Besonders geeignete Polyisocyanatkomponenten B) sind durch Modifizierung der vorstehend genannten monomeren Diisocyanate und/oder Triisocyanate erhältliche Polyisocyanate, z. B. aus aliphatischen und/oder cycloaliphatischen Diisocyanaten hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind, oder aus monomerem 2,4- und/oder 2,6-TDI durch Umsetzung mit Polyolen und/oder Oligomerisierung, vorzugsweise Trimerisierung, hergestellte Polyisocyanate mit Urethan- und/oder Isocyanuratstruktur, wie sie beispielsweise in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 oder JP 56059828 beispielhaft beschrieben sind, oder Mischungen aus mindestens zwei solcher Polyisocyanate.

Besonders geeignete Polyisocyanatkomponenten B) sind auch solche, die sowohl aromatische als auch aliphatische Isocyanatgruppen tragen, beispielsweise die in DE-A 1 670 667, EP-A 0 078 991, EP-A 0 696 606 und EP-A 0 807 623 beschriebenen gemischten Trimerisate bzw. Allophanate von 2,4- und/oder 2,6-TDI mit HDI.

Bei der Herstellung dieser Polyisocyanatkomponenten B) aus Diisocyanaten und/oder Triisocyanaten schließt sich an die eigentliche Modifizierungsreaktion in der Regel ein weiterer Verfahrenschritt zur Abtrennung der nicht umgesetzten überschüssigen monomeren Diisocyanate und/oder Triisocyanate an. Diese Monomerenabtrennung erfolgt nach an sich bekannten Verfahren vorzugsweise durch Dünnschichtdestillation im Hochvakuum oder durch Extraktion mit geeigneten gegenüber Isocyanatgruppen inerten Lösemitteln, beispielsweise aliphatischen oder cycloaliphatischen Kohlenwasserstoffen wie Pentan, Hexan, Heptan, Cyclopentan oder Cyclohexan.

Bevorzugt weist die Polyisocyanatkomponente B) einen Gehalt an monomeren Diisocyanaten von weniger als 1,5 Gew.-%, vorzugsweise weniger als 1,0 Gew.-%, besonders bevorzugt von weniger als 0,5 Gew.-%, bezogen auf den Festkörpergehalt des Polyisocyanats, auf. Die Rest-Monomeren Gehalte werden nach DIN EN ISO 10283:2007-11 gaschromatographisch mit internem Standard gemessen.

Besonders bevorzugt sind Polyisocyanatkomponenten B), hergestellt durch Modifizierung von PDI, HDI, IPDI, 4,4'-Diisocyanatodicyclohexylmethan, XDI, 2,4- und/oder 2,6-TDI.

Ganz besonders bevorzugte Polyisocyanatkomponenten B) sind Isocyanuratgruppen enthaltende Polyisocyanate auf Basis von PDI, HDI und/oder IPDI sowie Urethangruppen enthaltende TDI-Polyisocyanate, insbesondere monomerenarme Umsetzungsprodukte von 2,4- und/oder 2,6-TDI mit 1,1,1-Trimethylolpropan (TMP) und gegebenenfalls weiteren vorzugsweise niedermolekularen Alkoholen des Molekulargewichtsbereiches 62 bis 194 g/mol, wie z. B. Diethylenglykol.

Die vorstehend als geeignet, besonders geeignet, bevorzugt, besonders bevorzugt und ganz besonders bevorzugt genannten Polyisocyanatkomponenten B) weisen vorzugsweise eine mittlere NCO-Funktionalität von 2,3 bis 5,0, vorzugsweise von 2,5 bis 4,5, sowie einen Gehalt an Isocyanatgruppen, bezogen auf den Festkörpergehalt der Polyisocyanatkomponente, von 6,0 bis 26,0 Gew.-%, vorzugsweise von 8,0 bis 25,0 Gew.-%, besonders bevorzugt 10,0 bis 24,0 Gew.-% auf.

Die in den erfindungsgemäßen Polyisocyanatzubereitungen enthaltenen hydrophil modifizierten Polyisocyanatkomponenten A) enthalten neben der Polyisocyanatkomponente B) mindestens einen ionischen Emulgator C).

Hierbei handelt es sich um beliebige, ionische Gruppen enthaltende grenzflächenaktive Stoffe, die aufgrund ihrer Molekülstruktur in der Lage sind, Polyisocyanate bzw. Polyisocyanatzusammensetzungen in wässrigen Emulsionen über einen längeren Zeitraum, bevorzugt bis zu 8 Stunden, zu stabilisieren.

Eine bevorzugte Art ionischer Emulgatoren C) stellen beispielsweise Umsetzungsprodukte C1) der Polyisocyanatkomponenten B) mit organischen Verbindungen dar, die mindestens eine gegenüber Isocyanatgruppen reaktive Gruppe sowie mindestens eine Sulfonsäure- oder Sulfonatgruppe tragen. Hierbei handelt es sich um an sich bekannte hydroxy-, mercapto- oder aminofunktionelle Sulfonsäuren und/oder deren Salze oder um Mischungen aus mindestens zwei solcher Verbindungen.

Geeignete Aufbaukomponenten zur Herstellung von Emulgatoren C1) sind beispielsweise Hydroxysulfonsäuren der allgemeinen Formel (I) 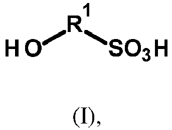 in welcher R¹ für einen Alkyl- oder Arylrest mit bis zu 10 Kohlenstoffatomen steht, der Estergruppen, Carbonylgruppen, bis zu zwei tertiäre Aminogruppen und/oder Hydroxylgruppen enthalten kann, oder für einen fünf- oder sechgliedrigen cycloaliphatischen Rest, der gegebenenfalls Stickstoff- oder Sauerstoffatome enthalten und auch durch weitere Hydroxylgruppen substituiert sein kann.

Als geeignete Hydroxysulfonsäuren seien beispielhaft genannt: 2-Hydroxyethansulfonsäure, 3-Hydroxypropansulfonsäure, 4-Hydroxybutansulfonsäure, 5-Hydroxypentansulfonsäure, 6-Hydroxyhexansulfonsäure, die isomeren Phenolsulfonsäuren, insbesondere 4-Hydroxybenzolsulfonsäure, 2-(Hydroxymethyl)benzolsulfonsäure, 3,5-Bis(hydroxymethyl) benzolsulfonsäure, 4-(2-Hydroxy-ethyl)-1-piperazinethansulfonsäure (HEPES), 4-(2-hydroxyethyl)-1-piperazinpropanesulfonsäure (HEPPS) und 2-Hydroxy-4-morpholinpropansulfonsäure (MOPSO).

Geeignete Hydroxysulfonsäuren sind auch spezielle Polyethersulfonsäuren, wie sie beispielsweise in der EP-A 0 592 073, der US 3 102 893 und der US 2 989 547 als Detergentien beschrieben sind.

Bevorzugte Hydroxysulfonsäuren zur Umsetzung mit der Sulfonatgruppen enthaltenden Polyisocyanatkomponente A) sind solche der allgemeinen Formel (I), in welcher R¹ für eine Alkylgruppe mit bis zu 6 Kohlenstoffatomen oder eine Arylgruppe mit 6 bis 10 Kohlenstoffatomen steht.

Besonders bevorzugte Hydroxysulfonsäuren sind 2-Hydroxyethansulfonsäure, 3-Hydroxypropansulfonsäure, 4-Hydroxybenzolsulfonsäure und/oder 2-(Hydroxymethyl)benzolsulfonsäure.

Zur Herstellung der ionischen Emulgatoren C1) geeignet sind darüberhinaus auch Mercaptosulfonsäuren, wie z. B. 2-Mercaptoethansulfonsäure und 3-Mercaptopropan-1-sulfonsäure.

Geeignete aminofunktionelle Sulfonsäuren zur Herstellung von Emulgatoren C1) sind beispielsweise substituierte aromatische Sulfonsäuren, die bis zu drei Sulfonsäuregruppen tragen können und bis zu drei, bevorzugt bis zu zwei, besonders bevorzugt genau eine primäre oder sekundäre, bevorzugt genau eine primäre Aminogruppe aufweisen, wobei die Positionen am aromatischen Ring in ortho-Stellung zur Aminogruppe unsubstituiert sind.

Bevorzugt handelt es hierbei um substituierte aromatische Sulfonsäuren der allgemeinen Formel (II) 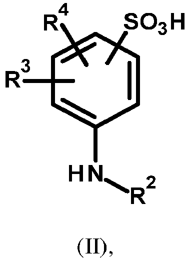 in welcher R², R³ und R⁴ unabhängig voneinander für gleiche oder verschiedene Reste stehen und Wasserstoff oder gesättigte oder ungesättigte, lineare oder verzweigte, aliphatische, cycloaliphatische, araliphatische oder aromatische organische Reste bedeuten, die zusätzlich Heteroatome in der Kette aufweisen können, wobei R³ und R⁴ auch in Kombination untereinander zusammen einen Ring, bevorzugt einen annellierten aromatischen Ring bilden können, mit der Maßgabe, dass mindestens einer der Reste R³ und R⁴ ungleich Wasserstoff ist.

Aliphatische oder araliphatische Reste R², R³ und R⁴ sind in Formel (II) vorzugsweise solche mit 1 bis 18 Kohlenstoffatomen, wie z. B. ein Methyl-, Ethyl-, Propyl-, Isopropyl-, n-Butyl-, sec-Butyl-, tert.-Butyl-, Pentyl-, Hexyl-, Heptyl-, Octyl-, 2-Ethylhexyl-, 2,4,4-Trimethylpentyl-, Decyl-, Dodecyl-, Tetradecyl-, Hexadecyl-, Octadecyl-, 1,1-Dimethylpropyl-, 1,1-Dimethylbutyl-, 1,1,3,3-Tetramethylbutyl-, Benzyl-, 1-Phenylethyl-, 2-Phenylethyl-, □,□-Dimethylbenzyl-, Benzhydryl-, p-Tolylmethyl-, 1-(p-Butylphenyl)-ethyl-, p-Chlorbenzyl-, 2,4-Dichlorbenzyl-, p-Methoxybenzyl-, m-Ethoxybenzyl-, 2-Cyanoethyl-, 2-Cyanopropyl-, 2-Methoxycarbonethyl-, 2-Ethoxycarbonylethyl-, 2-Butoxycarbonylpropyl-, 1,2-Di(methoxycarbonyl)ethyl-, 2-Methoxyethyl-, 2-Ethoxyethyl-, 2-Butoxyethyl-, Diethoxymethyl-, Diethoxyethyl-, 1,3-Dioxolan-2-yl-, 1,3-Dioxan-2-yl-, 2-Methyl-1,3-dioxolan-2-yl-, 4-Methyl-1,3-dioxolan-2-yl-, 2-lsopropoxyethyl-, 2-Butoxypropyl-, 2-Octyloxyethyl-, Chlormethyl-, 2-Chlorethyl-, Trichlormethyl-, Trifluormethyl-, 1,1-Dimethyl-2-chlorethyl-, 2-Methoxyisopropyl-, Butylthiomethyl-, 2-Dodecylthioethyl-, 2-Phenylthioethyl-, 2,2,2-Trifluorethyl-, 2-Phenoxyethyl-, 2-Phenoxypropyl-, 3-Phenoxypropyl-, 4-Phenoxybutyl-, 6-Phenoxyhexyl-, 2-Methoxyethyl-, 2-Methoxypropyl-, 3-Methoxypropyl-, 4-Methoxybutyl-, 6-Methoxyhexyl-, 2-Ethoxypropyl-, 3-Ethoxypropyl-, 4-Ethoxybutyl- oder 6-Ethoxyhexylrest.

Cycloaliphatische Reste R², R³ und R⁴ sind in Formel (II) vorzugsweise solche mit 5 bis 12 Kohlenstoffatomen, wie z. B. ein Cyclopentyl-, Cyclohexyl-, Cyclooctyl-, Cyclododecyl-, Methylcyclopentyl-, Dimethylcyclopentyl-, Methylcyclohexyl-, Dimethylcyclohexyl-, Diethylcyclohexyl-, Butylcyclohexyl-, Methoxycyclohexyl-, Dimethoxycyclohexyl-, Diethoxycyclohexyl-, Butylthiocyclohexyl-, Chlorcyclohexyl-, Dichlorcyclohexyl-, Dichlorcyclopentylrest sowie gesättigte oder ungesättigte bicyclische Systeme wie z. B. ein Norbornyl- oder ein Norbornenylrest.

Aromatische Reste R², R³ und R⁴ sind in Formel (II) vorzugsweise solche mit 6 bis 12 Kohlenstoffatomen, wie z. B. ein Phenyl-, Tolyl-, Xylyl-, o-Naphthyl-, β-Naphthyl-, 4-Diphenylyl-, Chlorphenyl-, Dichlorphenyl-, Trichlorphenyl-, Difluorphenyl-, Methylphenyl-, Dimethylphenyl-, Trimethylphenyl-, Ethylphenyl-, Diethylphenyl-, Isopropylphenyl-, tert.-Butylphenyl-, Dodecylphenyl-, Methoxyphenyl-, Dimethoxyphenyl-, Ethoxyphenyl-, Hexyloxyphenyl-, Methylnaphthyl-, Isopropylnaphthyl-, Chlornaphthyl-, Ethoxynaphthyl-, 2,6-Dimethylphenyl-, 2,4,6-Trimethylphenyl-, 2,6-Dimethoxyphenyl-, 2,6-Dichlorphenyl-, 4-Bromphenyl-, 2- oder 4-Nitrophenyl-, 2,4- oder 2,6-Dinitrophenyl-, 4-Dimethylaminophenyl-, 4-Acetylphenyl-, Methoxyethylphenyl- oder Ethoxymethylphenylrest.

Bilden die Reste R³ und R⁴ in Formel (II) zusammen einen Ring, so stehen R³ und R⁴ vorzugsweise für eine But-1,4-ylenkette oder besonders bevorzugt für eine 1,3-Butadien-1,4-ylenkette, was bedeutet, dass die aromatischen Sulfonsäuren in diesem Fall vorzugsweise eine Tetrahydronaphthalin- oder besonders bevorzugt eine Naphthalinstruktur aufweisen.

Besonders bevorzugt handelt es sich beim Rest R² um Wasserstoff, einen Methyl-, Ethyl-, n-Propyl-, Isopropyl-, tert-Butyl-, Cyclopentyl- oder Cyclohexylrest, ganz besonders bevorzugt um Wasserstoff.

Besonders bevorzugt handelt es sich bei den Resten R³ und R⁴ unabhängig voneinander um Wasserstoff, einen Methyl-, Ethyl-, Isopropyl-, tert-Butyl-, Hexyl-, Octyl-, Nonyl-, Decyl-, Dodecyl-, Phenyl- oder Naphthylrest, ganz besonders bevorzugt um Wasserstoff und/oder eine Methylgruppe. Dabei steht bevorzugt einer der Reste R4 und R5 für Wasserstoff während der andere ungleich Wasserstoff ist.

Die Sulfonsäuregruppe in Formel (II) steht am aromatischen Ring ebenso wie die Substituenten R³ und R⁴ in para- oder meta-Stellung bezogen auf die primäre bzw. sekundäre Aminogruppe, die Sulfonsäuregruppe steht dabei bevorzugt in meta-Stellung.

Geeignete aromatische Aminosulfonsäuren der allgemeinen Formel (II) zur Herstellung von Emulgatoren C1) sind beispielsweise 4-Aminotoluol-2-sulfonsäure, 5-Aminotoluol-2-sulfonsäure oder 2-Aminonaphthalin-4-sulfonsäure, besonders bevorzugt ist 4-Aminotoluol-2-sulfonsäure.

Weitere aminofunktionelle Sulfonsäuren zur Umsetzung mit den Polyisocyanatkomponenten B) zu Emulgatoren C1) sind schließlich auch solche der allgemeinen Formel (III) 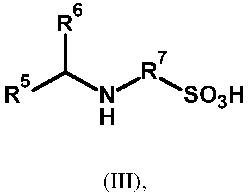 in welcher R⁵ und R⁶ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁵ und R⁶ auch in Kombination untereinander und gegebenenfalls einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁷ für einen linearen oder verzweigten aliphatischen Rest mit 2 bis 6 Kohlenstoffatomen steht.

Vorzugsweise stehen in der allgemeinen Formel (III) R⁵ und R⁶ unabhängig voneinander für gesättigte, lineare oder verzweigte, aliphatische oder cycloaliphatische organische Reste mit 1 bis 8 Kohlenstoffatomen, die auch in Kombination untereinander cycloaliphatische Ringe bilden können, und R⁷ für einen linearen oder verzweigten aliphatischen Rest mit 2 bis 4 Kohlenstoffatomen.

Geeignete Aminosulfonsäuren der allgemeinen Formel (III) sind beispielsweise 2-Aminoethansulfonsäure, 3-Aminopropan-1-sulfonsäure, 4-Aminobutan-1-sulfonsäure, 3-Aminobutan-1-sulfonsäure, 3-Amino-2-methylpropan-1-sulfonsäure, 4-Aminobutan-2-sulfonsäure, 2-Methylaminoethan-1 -sulfonsäure, 2-Ethylaminoethan-1-sulfonsäure, 2-Propylaminoethan-1 - sulfonsäure, 2-Isopropyl-aminoethan-1-sulfonsäure, 2-n-Butylaminoethan-1-sulfonsäure, 2-(tert-Butyl)aminoethan-1-sulfonsäure, 2-Pentylaminoethan-1-sulfonsäure, 2-Hexylaminoethan-1-sulfonsäure, 2-Octylaminoethan-1-sulfonsäure, 2-Anilinoethan-1-sulfonsäure, 2-Cyclopropylaminoethan-1-sulfonsäure, 2-Cyclo-butylaminoethan-1-sulfonsäure, 2-Cyclopentylaminoethan-1-sulfonsäure, 2-Cyclohexylaminoethan-1-sulfonsäure, die isomeren 2-(Methylcyclohexyl)aminoethan-1-sulfonsäuren, 2-(2,3-Dimethylcyclohexyl)aminoethan-1-sulfonsäure, 2-(3,3,5-Trimethylcyclohexylaminoethan-1-sulfonsäure, 2-(4-tert-Butylcyclohexyl)aminoethan-1-sulfonsäure, 2-Cycloheptylaminoethan-1-sulfonsäure, 2-Cyclooctylaminoethan-1-sulfonsäure, 2-(2-Norbornyl)aminoethan-1-sulfonsäure, 2-(1-Adamantyl)aminoethan-1-sulfonsäure, 2-(3,5-Dimethyl-1-adamantyl)aminoethan-1-sulfonsäure, 3-Methylaminopropan-1-sulfonsäure, 3-Ethylaminopropan-1-sulfonsäure, 3-Propylaminopropan-1-sulfonsäure, 3-Isopropylaminopropan-1-sulfonsäure, 3-n-Butylaminopropan-1-sulfonsäure, 3-(tert-Butyl)aminopropan-1-sulfonsäure, 3-Pentylaminopropan-1-sulfonsäure, 3-Hexylaminopropan-1-sulfonsäure, 3-Octylaminopropan-1-sulfonsäure, 3-Anilinopropan-1-sulfonsäure, 3-Cyclopropylaminopropan-1-sulfonsäure, 3-Cyclobutylaminopropan-1-sulfonsäure, 3-Cyclopentylaminopropan-1-sulfonsäure, 3-Cyclohexylaminopropan-1-sulfonsäure, die isomeren 3-(Methylcyclohexyl)aminopropan-1-sulfonsäuren, 3-(2,3-Dimethylcyclohexyl)aminopropan-1-sulfonsäure, 3-(3,3,5-Trimethylcyclohexylaminopropan-1-sulfonsäure, 3-(4-tert-Butylcyclohexyl)aminopropan-1-sulfonsäure, 3-Cycloheptylaminopropan-1-sulfonsäure, 3-Cyclooctylaminopropan-1-sulfonsäure, 3-(2-Norbornyl)aminopropan-1-sulfonsäure, 3-(1-Adamantyl)aminopropan-1-sulfonsäure, 3-(3,5-Dimethyl-1-adamantyl)aminopropan-1-sulfonsäure, 3-Methylaminobutan-1-sulfonsäure, 3-Ethylaminobutan-1-sulfonsäure, 3-Propylaminobutan-1-sulfonsäure, 3-Isopropylaminobutan-1-sulfonsäure, 3-n-Butylaminobutan-1-sulfonsäure, 3-(tert-Butyl)aminobutan-1-sulfonsäure, 3-Pentylaminobutan-1-sulfonsäure, 3-Hexylaminobutan-1-sulfonsäure, 3-Octylaminobutan-1-sulfonsäure, 3-Anilinobutan-1-sulfonsäure, 3-Cyclopropylaminobutan-1-sulfonsäure, 3-Cyclobutylaminobutan-1-sulfonsäure, 3-Cyclopentylaminobutan-1-sulfonsäure, 3-Cyclohexylaminobutan-1-sulfonsäure, die isomeren 3-(Methylcyclohexyl)aminobutan-1-sulfonsäuren, 3-(2,3-Dimethylcyclohexyl)aminobutan-1-sulfonsäure, 3-(3,3,5-Trimethylcyclohexylaminobutan-1-sulfonsäure, 3-(4-tert-Butylcyclohexyl)aminobutan-1-sulfonsäure, 3-Cycloheptylaminobutan-1-sulfonsäure, 3-Cyclooctylamino-butan-1-sulfonsäure, 3-(2-Norbornyl)aminobutan-1-sulfonsäure, 3-(1-Adamantyl)aminobutan-1-sulfonsäure, 3-(3,5-Dimethyl-1-adamantyl)aminobutan-1-sulfonsäure, 4-Methylaminobutan-1-sulfonsäure, 4-Ethylaminobutan-1-sulfonsäure, 4-Propylaminobutan-1-sulfonsäure, 4-Isopropylaminobutan-1-sulfonsäure, 4-n-Butylaminobutan-1-sulfonsäure, 4-(tert-Butyl)aminobutan-1-sulfonsäure, 4-Pentylaminobutan-1-sulfonsäure, 4-Hexylaminobutan-1-sulfonsäure, 4-Octylaminobutan-1-sulfonsäure, 4-Anilinobutan-1-sulfonsäure, 4-Cyclopropylaminobutan-1-sulfonsäure, 4-Cyclobutylaminobutan-1-sulfonsäure, 4-Cyclopentylaminobutan-1-sulfonsäure, 4-Cyclohexylaminobutan-1-sulfonsäure, die isomeren 4-(Methylcyclohexyl)aminobutan-1-sulfonsäuren, 4-(2,3-Dimethylcyclo-hexyl)aminobutan-1-sulfonsäure, 4-(3,3,5-Trimethylcyclohexylaminobutan-1-sulfonsäure, 4-(4-tert-Butylcyclohexyl)aminobutan-1-sulfonsäure, 4-Cycloheptylaminobutan-1-sulfonsäure, 4-Cyclooctyl-aminobutan-1-sulfonsäure, 4-(2-Norbornyl)aminobutan-1-sulfonsäure, 4-(1-Adamantyl)aminobutan-1-sulfonsäure, 4-(3,5-Dimethyl-1-adamantyl)aminobutan-1-sulfonsäure, 3-Methylamino-2-methylpropan-1-sulfonsäure, 3-Ethylamino-2-methyl-propan-1-sulfonsäure, 3-Propyl-amino-2-methylpropan-1-sulfonsäure, 3-Isopropylamino-2-methyl-propan-1-sulfonsäure, 3-n-Butylamino-2-methylpropan-1-sulfonsäure, 3-(tert-Butyl)amino-2-methylpropan-1-sulfonsäure, 3-Pentylamino-2-methylpropan-1-sulfonsäure, 3-Hexylamino-2-methylpropan-1-sulfonsäure, 3-Octylamino-2-methylpropan-1-sulfonsäure, 3-Anilino-2-methylpropan-1-sulfonsäure, 3-Cyclopropylamino-2-methylpropan-1-sulfonsäure, 3-Cyclobutylamino-2-methylpropan-1-sulfonsäure, 3-Cyclopentylamino-2-methylpropan-1-sulfonsäure, 3-Cyclohexylamino-2-methylpropan-1-sulfonsäure, die isomeren 3-(Methylcyclohexyl)amino-2-methylpropan-1-sulfonsäuren, 3-(2,3-Dimethylcyclohexyl)amino-2-methylpropan-1-sulfonsäure, 3-(3,3,5-Trimethylcyclohexylamino-2-methylpropan-1-sulfonsäure, 3-(4-tert-Butylcyclohexyl)amino-2-methylpropan-1-sulfonsäure, 3-Cycloheptylamino-2-methylpropan-1-sulfonsäure, 3-Cyclooctylamino-2-methylpropan-1-sulfonsäure, 3-(2-Norbornyl)amino-2-methylpropan-1-sulfonsäure, 3-(1-Adamantyl)amino-2-methyl-propan-1-sulfonsäure, 3-(3,5-Dimethyl-1-adamantyl)amino-2-methylpropan-1-sulfonsäure, 3-Methylaminobutan-2-sulfonsäure, 3-Ethylaminobutan-2-sulfonsäure, 3-Propylaminobutan-2-sulfonsäure, 3-Isopropylaminobutan-2-sulfonsäure, 3-n-Butylaminobutan-2-sulfonsäure, 3-(tert-Butyl)aminobutan-2-sulfonsäure, 3-Pentylaminobutan-2-sulfonsäure, 3-Hexylaminobutan-2-sulfonsäure, 3-Octylaminobutan-2-sulfonsäure, 3-Anilinobutan-2-sulfonsäure, 3-Cyclopropylaminobutan-2-sulfonsäure, 3-Cyclobutylaminobutan-2-sulfonsäure, 3-Cyclopentylaminobutan-2-sulfonsäure, 3-Cyclohexylaminobutan-2-sulfonsäure, die isomeren 3-(Methylcyclohexyl)aminobutan-2-sulfonsäuren, 3-(2,3-Dimethylcyclohexyl)aminobutan-2-sulfonsäure, 3-(3,3,5-Trimethylcyclohexylaminobutan-2-sulfonsäure, 3-(4-tert-Butylcyclohexyl)aminobutan-2-sulfonsäure, 3-Cycloheptylaminobutan-2-sulfonsäure, 3-Cyclooctylaminobutan-2-sulfonsäure, 3-(2-Norbornyl)aminobutan-2-sulfonsäure, 3-(1-Adamantyl)amino-2-sulfonsäure und 3-(3,5-Dimethyl-1-adamantyl)aminobutan-2-sulfonsäure.

Besonders bevorzugte Aminosulfonsäuren zur Umsetzung mit den Polyisocyanatkomponenten B) zu Emulgatoren C1) sind solche der allgemeinen Formel (III), in welcher keiner der Reste R⁵ und R⁶ für Wasserstoff steht.

Ganz besonders bevorzugte Aminosulfonsäuren zur Umsetzung mit den Polyisocyanatkomponenten B) sind 2-Isopropylaminoethan-1-sulfonsäure, 3-Isopropylaminopropan-1-sulfonsäure, 4-Isopropylaminobutan-1-sulfonsäure, 2-Cyclohexylaminoethan-1-sulfonsäure, 3-Cyclohexylaminopropan-1-sulfonsäure und 4-Cyclohexylaminobutan-1-sulfonsäure.

Zur Herstellung von Sulfonatgruppen enthaltenden Emulgatormolekülen C1) werden die mindestens eine gegenüber Isocyanatgruppen reaktive Gruppe tragenden Sulfonsäuren vor, während oder im Anschluss an die Umsetzung mit der Polyisocyanatkomponente B) zumindest anteilig neutralisiert und auf diese Weise in Sulfonatgruppen überführt.

Als Neutralisationsmittel hierfür geeignet sind beliebige Basen, wie Alkalihydroxide oder Erdalkalihydroxide, vorzugsweise jedoch Amine, insbesondere tertiäre Monoamine, wie z. B. Trimethylamin, Triethylamin, die isomeren Tripropyl- und Tributylamine, N,N-Dimethylethylamin, N,N-Dimethylpropylamin, N,N-Dimethylisopropylamin, N,N-Dimethylbutylamin, N,N-Dimethylisobutylamin, N,N-Dimethyloctylamin, N,N-Dimethyl-2-ethylhexylamin, N,N-Dimethyllaurylamin, N,N-Diethylmethylamin, N,N-Diethylpropylamin, N,N-Diethylbutylamin, N,N-Diethylhexylamin, N,N-Diethyloctylamin, N,N-Diethyl-2-ethylhexylamin, N,N-Diethyllaurylamin, N,N-Diisopropylmethylamin, N,N-Diisopropylethylamin, N,N-Diisopropylbutylamin, N,N-Diisopropyl-2-ethylhexylamin, N,N-Dioctylmethylamin, N,N-Dimethylallylamin, N,N-Dimethylbenzylamin, N,N-Diethylbenzylamin, N,N-Dibenzylmethylamin, Tribenzylamin, N,N-Dimethyl-4-methylbenzylamin, N,N-Dimethylcyclohexylamin, N,N-Diethylcyclohexylamin, N,N-Dicyclohexylmethylamin, N,N-Dicyclohexylethylamin, Tricyclohexylamin, N-Methylpyrrolidin, N-Ethylpyrrolidin, N-Propylpyrrolidin, N-Butylpyrrolidin, N-Methylpiperidin, N-Ethylpiperidin, N-Propylpiperidin, N-Butylpiperidin, N-Methylmorpholin, N-Ethylmorpholin, N-Propylmorpholin, N-Butylmorpholin, N-sec-Butylmorpholin, N-tert-Butylmorpholin, N-Isobutylmorpholin und Quinuclidin oder tertiäre Diamine, wie z. B. 1,3-Bis-(dimethylamino)-propan, 1,4-Bis-(dimethylamino)-butan und N,N'-Dimethylpiperazin, oder Mischungen aus mindestens zwei solcher tertiären Amine.

Geeignete, jedoch weniger bevorzugte Neutralisationsamine sind daneben auch gegenüber Isocyanaten reaktive Gruppen tragende tertiäre Amine, beispielsweise Alkanolamine, wie z. B. Dimethylethanolamin, Methyldiethanolamin oder Triethanolamin.

Bevorzugte Neutralisationsamine für die Sulfonsäuren sind N,N-Dimethylbutylamin, N,N-Dimethyl-2-ethylhexylamin, N,N-Diethylmethylamin, N,N-Diisopropylethylamin, N,N-Diisopropyl-2-ethylhexylamin, N,N-Dimethylcyclohexylamin, N,N-Dicyclohexylmethylamin, N-Methylpyrrolidin, N-Methylpiperidin, N-Ethylpiperidin, N-Methylmorpholin, N-Ethylmorpholin, N-Isobutylmorpholine oder deren Gemische.

Besonders bevorzugt sind N,N-Dimethylbutylamin, N,N-Diethylmethylamin, N,N-Diisopropylethylamin, N,N-Dimethylcyclohexylamin, N-Methylpiperidin, N-Ethylmorpholin oder deren Gemische.

Die genannten Neutralisationsmittel werden zur Herstellung der Sulfonatgruppen enthaltenden Emulgatormoleküle C1) in solchen Mengen zugesetzt, dass die Sulfonsäuregruppen der Ausgangsverbindungen in den resultierenden erfindungsgemäßen Verfahrensprodukten zu mindestens 20 mol-%, vorzugsweise zu mindestens 50 mol-%, besonders bevorzugt zu mindestens 90 mol-% und ganz besonders bevorzugt vollständig neutralisiert sind und in Form von Sulfonatgruppen vorliegen.

Die Umsetzung der Polyisocyanatkomponente B) mit mindestens einer, mindestens eine gegenüber Isocyanatgruppen reaktive Gruppe tragenden Sulfonsäure zu einem Emulgatormolekül C1) findet in der Regel bei Temperaturen von 40 bis 150 °C, vorzugsweise 50 bis 130 °C, unter Einhaltung eines Äquivalent-Verhältnisses von NCO-Gruppen zur Summe aus Hydroxyl-, Mercapto- und Aminogruppen von 2:1 bis 400:1, vorzugsweise von 4:1 bis 250:1, statt und kann beispielsweise nach einem der in EP-A 0 703 255, WO 01/88006, WO 2009/010469 oder WO 2015/035673 beschriebenen Verfahren erfolgen.

Üblicherweise erfolgt die Umsetzung der Polyisocyanatkomponente B) mit mindestens einer, mindestens eine gegenüber Isocyanatgruppen reaktive Gruppe tragenden Sulfonsäure in solchen Mengen, dass die resultierende hydrophil modifizierte Polyisocyanatkomponente A) mindestens 0,90 Gew.-%, vorzugsweise mindestens 0,95 Gew.-%, besonders bevorzugt von 1,00 bis 3,00 Gew.-%, ganz besonders bevorzugt von 1,10 bis 1,80 Gew.-% an Sulfonatgruppen, berechnet als SO₃; Mol.-Gewicht = 80 g/mol, in chemisch gebundener Form enthalten.

Dabei kann die Umsetzung der Polyisocyanatkomponenten B) mit den genannten Hydroxy-Mercapto- und/oder Aminosulfonsäuren entweder in einem separaten Reaktionsschritt mit anschließendem Vermischen der erhaltenen ionischen Emulgatoren C1) mit den in eine hydrophile Form zu überführenden Polyisocyanatkomponenten B) oder aber in der Weise erfolgen, dass man die Polyisocyanatkomponenten B) in situ mit einer entsprechenden Menge der Hydroxy- Mercapto- und/oder Aminosulfonsäuren umsetzt, wobei sich direkt eine hydrophile Polyisocyanatkomponente A) bildet, die neben nicht umgesetztem Polyisocyanat B) den sich in situ aus den Hydroxy-Mercapto- und/oder Aminosulfonsäuren, dem Neutralisationsamin und einem Teil der Komponenten B) bildenden Emulgator C1) enthält.

Bei der erstgenannten Variante der separaten Herstellung der ionischen Emulgatoren C1) werden diese vorzugsweise unter Einhaltung eines Äquivalentverhältnisses von Isocyanatgruppen zu gegenüber Isocyanatgruppen reaktiven Gruppen von 2 : 1 bis 6 : 1 hergestellt. Bei der in situ-Herstellung der Emulgatoren C1) kann selbstverständlich ein hoher Überschuss an Isocyanatgruppen innerhalb des oben genannten breiten Bereichs zur Anwendung gelangen.

Ein weiterer bevorzugter Typ geeigneter Emulgatoren C) sind solche, die in einem Molekül gleichzeitig ionische und nichtionische Strukturen enthalten. Bei diesen Emulgatoren C2) handelt es sich z. B. um mit tertiären Aminen, wie z. B. den oben genannten Neutralisationsaminen neutralisierte Alkylphenolpolyglykoletherphosphate und -phosphonate oder Fettalkoholpolyglykoletherphosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolethersulfate oder Fettalkoholpolyglykolethersulfate.

Bevorzugt enthält die Emulgatorkomponente C2) in diesem Fall wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats, Alkylphenolpolyglykolethersulfats und/oder Fettalkoholpolyglykolethersulfats.

Neben den genannten ionischen Emulgatoren C) können die in den erfindungsgemäßen Polyisocyanatzubereitungen enthaltenen hydrophil modifizierten Polyisocyanatkomponenten A) zusätzlich weitere nichtionische Emulgatoren D) enthalten.

Bevorzugte, gegebenenfalls mitzuverwendende nichtionische Emulgatoren stellen beispielsweise Umsetzungsprodukte D1) der Polyisocyanatkomponenten B) mit hydrophilen Polyetheralkoholen dar.

Hierfür geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyetheralkohole, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher bevorzugter, gegebenenfalls mitzuverwendender nichtionischer Emulgatoren D1) ist prinzipiell bekannt und beispielsweise in EP-B 0 206 059 und EP-B 0 540 985 beschrieben.

Wie bereits für die ionischen Emulgatoren C1) beschrieben, kann auch die Umsetzung der Polyisocyanatkomponenten B) mit den genannten Polyetheralkoholen entweder in einem separaten Reaktionsschritt mit anschließendem Vermischen des erhaltenen Emulgators D1) mit den in eine hydrophile Form zu überführenden Polyisocyanatkomponenten B) oder aber in der Weise erfolgen, dass man die Polyisocyanatkomponenten B) mit einer entsprechenden Menge der Polyetheralkohole abmischt, wobei sich spontan eine hydrophile Polyisocyanatkomponente A) bildet, die neben nicht umgesetztem Polyisocyanat B) den sich in situ aus dem Polyetheralkohol und einem Teil der Komponente B) bildenden Emulgator D1) enthält.

Die Herstellung dieser Art nichtionischer Emulgatoren D1) erfolgt im Allgemeinen bei Temperaturen von 40 bis 180 °C, vorzugsweise 50 bis 150 °C, unter Einhaltung eines NCO/OH-Äquivalent-Verhältnisses von 2:1 bis 400:1, vorzugsweise von 4:1 bis 140:1.

Bei der erstgenannten Variante der separaten Herstellung der nichtionischen Emulgatoren D1) werden diese vorzugsweise unter Einhaltung eines NCO/OH-Äquivalentverhältnisses von 2 : 1 bis 6 : 1 hergestellt. Bei der in situ-Herstellung der Emulgatoren D1) kann selbstverständlich ein hoher Überschuss an Isocyanatgruppen innerhalb des oben genannten breiten Bereichs zur Anwendung gelangen.

Die Reaktion der Polyisocyanatkomonente B) mit den genannten hydrophilen Polyetheralkoholen kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen, bezogen auf die Summe aus Urethan- und Allophanatgruppen, weiter umgesetzt werden, wobei ein nichtionischer Emulgator D2) entsteht. In diesem Fall werden die Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren, insbesondere Zinkverbindungen, wie z. B. Zink-(II)-n-octanoat, Zink (II)-2-ethyl-1-hexanoat oder Zink-(II)-stearat, zur Reaktion gebracht.

Einen weiteren bevorzugten Typ gegebenenfalls mitzuverwendender nichtionischer Emulgatoren D) stellen beispielsweise auch Umsetzungsprodukte von monomeren Diisocyanaten oder Diisocyanatgemischen mit den oben genannten ein- oder mehrwertigen hydrophilen Polyetheralkoholen in einem OH/NCO-Äquivalentverhältnis von 0,6 : 1 bis 1,2 : 1 dar. Insbesondere bevorzugt ist die Umsetzung von monomeren Diisocyanaten oder Diisocyanatgemischen mit reinen Polyethylenglycolmonoalkyletheralkoholen, die im statistischen Mittel 5 bis 50, bevorzugt 5 bis 25 Ethylenoxideinheiten aufweisen. Die Herstellung solcher Emulgatoren D3) ist ebenfalls bekannt und beispielsweise in EP-B 0 486 881 beschrieben.

Gegebenenfalls können die Emulgatoren D3) aber auch im Anschluss an das Abmischen der Komponenten in den vorstehend beschriebenen Mengenverhältnissen in Gegenwart geeigneter Katalysatoren mit den Polyisocyanaten B) unter Allophanatisierung umgesetzt werden. Dabei entstehen ebenfalls hydrophile Polyisocyanatkomponenten A), die neben nicht umgesetztem Polyisocyanat B) einen sich in situ aus dem Emulgator D3) und einem Teil der Komponente B) bildenden weiteren nichtionischen Emulgatortyp D4) mit Allophanatstruktur enthalten. Auch die in situ-Herstellung solcher Emulgatoren D4) ist bereits bekannt und beispielsweise in WO 2005/047357 beschrieben.

Unabhängig von der Art der Emulgatoren C) und D) und deren Herstellung wird deren Menge bzw. die Menge der bei einer in situ-Herstellung der Emulgatoren den Polyisocyanaten B) zugesetzten ionischen und gegebenfalls nichtionischen Komponenten im allgemeinen so bemessen, dass die letztlich erhaltenen hydrophil-modifizierten Polyisocyanatzusammensetzungen A) eine die Dispergierbarkeit des Polyisocyanatgemisches gewährleistenden Menge an Emulgator C) und gegebenenfalls D) enthalten.

Dabei ist bei Mitverwendung nichtionischer Emulgatoren D) die Reihenfolge der Hydrophilierung frei wählbar. So kann die Zugabe oder in situ-Herstellung der nichtionischen Emulgatoren D) zu jedem beliebigen Zeitpunkt vor, während oder im Anschluss an die Zugabe oder in situ-Herstellung der ionischen Emulgatoren C) erfolgen.

Die erfindungsgemäßen Polyisocyanatzubereitungen enthalten neben der ionisch hydrophil modifizierten Polyisocyanatkomponente A) mindestens eine Lösemittelkomponente E), die aus mindestens einem organischen Lösemittel besteht und einen Peroxid-Gehalt von höchstens 70 mg/l H₂O₂, bevorzugt von höchstens 60 mg/l H₂O₂ und besonders bevorzugt von höchstens 50 mg/l H₂O₂ aufweist.

Geeignete organische Lösemittel sind grundsätzlich sämtliche gegenüber Isocyanatgruppen chemisch inerte Lösemittel, d. h. solche, die keine gegenüber Isocyanatgruppen reaktiven Gruppen, wie z. B. Hydroxyl- oder Aminogruppen, aufweisen.

Derartige organische Lösemittel sind beispielsweise die an sich bekannten üblichen Lacklösemittel, wie z. B. Methylacetat, Ethylacetat, n-Propyacetat, Isopropylacetat, Butylacetat, Isobutylacetat, t-Butylacetat, Amylacetat, 2-Methylpentylacetat, 2-Ethylhexylacetat, Ethylenglycoldiacetat, Propylenglykoldiacetat, n-Propylpropionat, n-Butylpropionat, n-Pentylpropionat, die als dibasische Ester (DBE) bekannten Methylester von Glutarsäure, Bernsteinsäure und Adipinsäure, die häufig auch als Gemisch vorliegen, Aceton, 2-Butanon (MEK), 2-Pentanon, 4-Methyl-2-pentanon (MIBK), 2-Heptanon, 5-Methylhexan-2-on, 2,6-Dimethylheptan-4-on, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, Acetale, wie 1,1,2,2-Tetramethoxyethan, 1,1,2,2-Tetraethoxyethan, 2,2-Dimethoxyessigsäureethylester oder 2,2-Diethoxyessigsäuremethylester, Lösemittel wie Diethylenglykoldimethylether, Dipropylenglykoldimethylether, Ethylenglykolmethyl-etheracetat, Ethylenglykolethyletheracetat, Ethylenglykolbutyletheracetat, Diethylenglykol-butyletheracetat, Dipropylenglycolmethyletheracetat, Dipropylenglycolethyl-etheracetat, 1-Methoxypropyl-2-acetat (MPA), 3-Methoxy-n-butylacetat, Tetrahydrofuran, 1,3-Dioxolan, N,N-Dimethylformamid, N-Methylpyrrolidon und N-Methylcaprolactam, oder auch spezielle fluorierte Lösemittel, wie p-Chlorbenzotrifluorid (PCBTF; OXSOL^{®} 100) oder Mischungen aus mindestens zwei solcher Lösemittel.

Vorzugsweise weisen diese Lösemittel für einen Einsatz in der Lösemittelkomponente E) einen Wassergehalt von höchstens 500 ppm auf. Für solche wasserarmen Lösemittel haben sich im Markt beispielsweise Bezeichnungen wie "urethane grade" oder "PU-Qualität" etabliert.

Erfindungsgemäß beträgt der Peroxidgehalt in der Lösemittelkomponente E) höchstens 70 mg/l H₂O₂, bevorzugt höchstens 60 mg/l H₂O₂ und besonders bevorzugt höchstens 50 mg/l H₂O₂. Aufgrund der Tatsache, dass eine völlige Peroxidfreiheit bei Lacklösemitteln in der Praxis nur verbunden mit erheblichem Aufwand und Kosten zu erreichen ist, beträgt der Peroxidgehalt in der Lösemittelkomponente E) vorzugsweise höchstens 60 mg/l H₂O₂, besonders bevorzugt höchstens 50 mg/l H₂O₂, ganz besonders bevorzugt von 1 bis 30 mg/l H₂O₂, noch bevorzugter von 1 bis 25 mg/l H₂O₂ und insbesondere von 2 bis 10 mg/l H₂O₂, wobei es sich bei diesen Werten um den mittleren Peroxidgehalt aller in der Lösemittelkomponente E) vorliegenden organischen Lösemittel handelt.

Dabei liegen die hydrophil modifizierte Polyisocyanatkomponente A) und die Lösemittelkomponente E) in den erfindungsgemäßen Polyisocyanatzubereitungen in solchen Mengen vor, dass der berechnete Peroxid-Gehalt der Polyisocyanatzubereitungen unmittelbar nach dem Vermischen höchstens 20 mg/l H₂O₂, bevorzugt 1 bis 20 mg/l H₂O₂, besonders bevorzugt 1 bis 18 mg/l H₂O₂ und ganz besonders bevorzugt 1 bis 15 mg/l H₂O₂, jeweils bezogen auf die Summe aus A) und E), beträgt.

Der Anteil der Lösemittelkomponente E) beträgt in den erfindungsgemäßen Polyisocyanatzubereitungen an der Gesamtmenge der Komponenten A) und E) in der Regel 5 bis 90 Gew.-%, vorzugsweise 10 bis 80 Gew.-%, besonders bevorzugt 15 bis 70 Gew.-% und ganz besonders bevorzugt 20 bis 60 Gew.-%.

Im Rahmen der vorliegenden Anmeldung erfolgte die Bestimmung des Peroxid-Gehaltes mittels kommerziell verfügbarer Peroxid-Teststäbchen. Geeignete Teststäbchen sind beispielsweise MQuant^{®} Peroxid-Teststäbchen der Fa. Merck KgaA, Darmstadt, Deutschland oder Quantofix^{®} Peroxid-Taststäbchen der Fa. MACHEREY-NAGEL GmbH & Co. KG, Düren, Deutschland.

Diesen Teststäbchen liegt als Reaktionsprinzip zugrunde, dass Peroxid-Sauerstoff enzymatisch mittels einer Peroxidase auf einen organischen Redoxindikator in der Reaktionszone übertragen wird, wobei ein gefärbtes Oxidationsprodukt entsteht. Die Peroxidkonzentration wird halbquantitativ durch visuelle Beurteilung der Reaktionszone des Teststäbchens mit den Feldern einer Farbskala ermittelt. Für verschiedene Konzentrationsbereiche existieren verschiedene Teststäbchen mit unterschiedlich abgestuften Farbskalen. Teststäbchen der Merck-Artikelnummer 10011.0001. decken beispielsweise den Bereich 0,5 - 2 - 5 - 10 - 25 mg/L Peroxid ab, solche der Merck-Artikelnummer 1.10081.0001. den Bereich 1 - 3 - 10 - 30 - 100 mg/L Peroxid, solche der Merck-Artikelnummer 1.10337.0001. den Bereich 100 - 200 - 400 - 600 - 800 - 1000 mg/L Peroxid, Teststäbchen der MACHEREY-NAGEL Artikelnummer REF 913 19 den Bereich 0 - 0,5 - 2 - 5 - 10 - 25 mg/L Peroxid, solche der MACHEREY-NAGEL Artikelnummer REF 913 12 den Bereich 0 - 1 - 3 - 10 - 30 - 100 mg/L Peroxid und solche der MACHEREY-NAGEL Artikelnummer REF 913 33 den Bereich 0 - 50 - 150 - 300 - 500 - 800 - 1000 mg/L Peroxid, wobei die Angabe Peroxid jeweils einem Wasserstoffperoxid-Äquivalent entspricht.

Somit ist eine bevorzugte Ausführungsform der Erfindung eine Polyisocyanatzubereitung, enthaltend mindestens eine, mit mindestens einem ionischen Emulgator hydrophil modifizierte Polyisocyanatkomponente A) und eine Lösemittelkomponente E), die aus mindestens einem organischen Lösemittel besteht, dadurch gekennzeichnet, dass die Lösemittelkomponente E) einen Gehalt an Peroxiden, bestimmt mit Hilfe von Peroxidteststäbchen, von höchstens 70 mg/l H₂O₂-Äquivalenten, bevorzugt von höchstens 60 mg/l H₂O₂-Äquivalenten und besonders bevorzugt von höchstens 50 mg/l H₂O₂-Äquivalenten, aufweist, wobei es sich bei diesem Wert um den mittleren Peroxidgehalt aller in der Lösemittelkomponente E) vorliegenden organischen Lösemittel handelt, und die Polyisocyanatkomponente A) und die Lösemittelkomponente E) in solchen Mengen vorliegen, dass der berechnete Peroxid-Gehalt der Polyisocyanatzubereitung, bezogen auf die Summe aus A) und E), höchstens 20 mg/l H₂O₂ beträgt. Auch hier sind die in den Unteransprüchen 2 bis 12 genannten bevorzugten Ausführungsformen genauso bevorzugt. Diese Ausführungsform kann auch Grundlage der erfindungsgemäßen Verwendung, Beschichtungsmittel und des beschichteten Substrats sein.

Die Herstellung der erfindungsgemäßen Polyisocyanatzubereitungen aus der hydrophil modifizierten Polyisocyanatkomponente A) und der Lösemittelkomponente E) kann durch einfaches Vermischen von Hand oder mit Hilfe geeigneter Mischaggregate vorzugsweise bei Temperaturen von 0 bis 60°C gegebenenfalls bereits während der Herstellung der hydrophil modifizierten Polyisocyanatkomponente A) oder zu einem beliebigen Zeitpunkt danach bis unmittelbar vor ihrer erfindungsgemäßen Verwendung erfolgen.

Bei Einsatz von Lösemittelkomponenten E), deren Peroxidgehalt höchstens 70 mg/l H₂O₂, bevorzugt höchstens 60 mg/l H₂O₂ und besonders bevorzugt höchstens 50 mg/l H₂O₂, beträgt, stellen die auf diese Weise erhaltenen erfindungsgemäßen Polyisocyanatzubereitungen klare transparente Polyisocyanatlösungen dar, die Hazen-Farbzahlen von weniger als 60, vorzugsweise weniger als 40, besonders bevorzugt weniger als 30 aufweisen und diese auch bei längerer Lagerung von 5 Tagen bei 50°C nicht überschreiten. Die Messung der Hazen-Farbzahlen erfolgt hierbei spektralphotometrisch nach DIN EN ISO 6271-2:2005-03.

Die erfindungsgemäßen lösemittelhaltigen Polyisocyanatzubereitungen lassen sich leicht, ohne Einsatz hoher Scherkräfte durch bloßes Einrühren in Wasser in vorzugsweise sedimentationsstabile Dispersionen überführen.

Gegebenenfalls können ihnen vor der Emulgierung beliebige weitere nichthydrophilierte Polyisocyanate, beispielsweise solche der als geeignete Polyisocyanatkomponente B) genannten Art, zugesetzt werden, wodurch Polyisocyanatzubereitungen erhalten werden, die, sofern die oben gemachten Angaben bezüglich des Anteils der Lösemittelkomponente E) und deren Peroxidgehaltes eingehalten werden, ebenfalls erfindungsgemäße Polyisocyanatzubereitungen darstellen, da diese im Allgemeinen aus Gemischen aus
(i) einer hydrophil modifizierten Polyisocyanatkomponente A), enthaltend mindestens eine Polyisocyanatkomponente B) sowie mindestens einen ionischen und gegebenenfalls nichtionischen Emulgator C), und
(ii) einer Lösemittelkomponente E) der beispielhaft genannten Art bestehen.

In solchen Mischungen übernehmen die in den erfindungsgemäßen Polyisocyanatzubereitungen vorliegenden Emulgatoren C) die Funktion eines Emulgators auch für den nachträglich zugemischten Anteil an nichthydrophilen Polyisocyanaten B).

Die erfindungsgemäßen lösemittelhaltigen Polyisocyanatzubereitungen stellen wertvolle Ausgangsmaterialien zur Herstellung von Polyurethan-Kunststoffen nach dem Isocyanat-Polyadditionsverfahren dar.

Hierzu werden die Polyisocyanatzubereitungen vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen lösemittelhaltigen Polyisocyanatzubereitungen als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 20 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgeäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Ein weiterer Gegenstand der vorliegenden Erfindung ist ein Beschichtungsmittel enthaltend mindestens eine erfindungsgemäße lösemittelhaltige Polyisocyanatzubereitung.

Bei der erfindungsgemäßen Verwendung als Vernetzerkomponente für wäßrige Lackbindemittel werden die erfindungsgemäßen lösemittelhaltigen Polyisocyanatzubereitungen im Allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen lösemittelhaltigen Polyisocyanatzubereitungen in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen lösemittelhaltigen Polyisocyanatzubereitungen auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder Mischungen aus mindestens zwei dieser Blockierungsmittel.

Als Untergründe für die mit Hilfe der erfindungsgemäßen lösemittelhaltigen Polyisocyanatzubereitungen formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können. Ein bevorzugtes Anwendungsgebiet für die erfindungsgemäßen lösemittelhaltigen Polyisocyanatzubereitungen sind wässrige Zweikomponentenlacke für die Holz- und Möbellackierung.

Im Allgemeinen besitzen die mit den erfindungsgemäßen lösemittelhaltigen Polyisocyanatzubereitungen formulierten wäßrigen Beschichtungsmittel, denen gegebenenfalls die auf dem Lacksektor üblichen Hilfs- und Zusatzmittel, wie z. B. Verlaufshilfsmittel, Farbstoffe, Farbpigmente, Füllstoffe oder Mattierungsmittel einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Ein weiterer Gegenstand der vorliegenden Erfindung ist ein Substrat, beschichtet mit einem gegebenenfalls unter Wärmeeinwirkung ausgehärteten erfindungsgemäßen Beschichtungsmittel.

Aufgrund ihrer geringen Eigenfarbe führt die Verwendung der erfindungsgemäßen lösemittelhaltigen Polyisocyanatzubereitungen als Vernetzerkomponente für wäßrige Polyurethanlacke zu Beschichtungen, die, als Klarlacke appliziert, den Farbton des Substrats bzw. des Basislacks oder in pigmentierten Lacken den Pigmentfarbton nicht negativ beeinflussen.

Neben der bevorzugten Verwendung als Vernetzerkomponenten für wäßrige 2K-PUR-Lacke eignen sich die erfindungsgemäßen lösemittelhaltigen Polyisocyanatzubereitungen hervorragend als Vernetzer für wäßrige Dispersionsklebstoffe, Leder- und Textilbeschichtungen, Textildruckpasten oder auch als AOX-freie Papierhilfsmittel.

Die für die erfindungsgemäßen lösemittelhaltigen Polyisocyanatzubereitungen als bevorzugt gekennzeichneten Merkmale sind auch für die weiteren Erfindungsgegenstände bevorzugt.

Die Erfindung betrifft in einer ersten Ausführungsform eine Polyisocyanatzubereitung, enthaltend mindestens eine, mit mindestens einem ionischen Emulgator hydrophil modifizierte Polyisocyanatkomponente A) und eine Lösemittelkomponente E), die aus mindestens einem organischen Lösemittel besteht, dadurch gekennzeichnet, dass die Lösemittelkomponente E) einen Gehalt an Peroxiden von höchstens 70 mg/l H₂O₂-Äquivalenten, bevorzugt von höchstens 60 mg/l H₂O₂-Äquivalenten und besonders bevorzugt von höchstens 50 mg/l H₂O₂-Äquivalenten, aufweist, wobei es sich bei diesem Wert um den mittleren Peroxidgehalt aller in der Lösemittelkomponente E) vorliegenden organischen Lösemittel handelt, und die Polyisocyanatkomponente A) und die Lösemittelkomponente E) in solchen Mengen vorliegen, dass der berechnete Peroxid-Gehalt der Polyisocyanatzubereitung, bezogen auf die Summe aus A) und E), höchstens 20 mg/l H₂O₂ beträgt.

In einer zweiten Ausführungsform betrifft die Erfindung eine Polyisocyanatzubereitung nach Ausführungsform 1, dadurch gekennzeichnet, dass die hydrophil modifizierte Polyisocyanatkomponente A) aus einer Polyisocyanatkomponente B) sowie mindestens einem ionischen Emulgator C) besteht.

In einer dritten Ausführungsform betrifft die Erfindung eine Polyisocyanatzubereitung nach Ausführungsform 1 oder 2, dadurch gekennzeichnet, dass es sich bei der Polyisocyanatkomponente B) um beliebige Diisocyanate, Triisocyanate und/oder Polyisocyanate mit aliphatisch, cycloaliphatisch, araliphatisch und/oder aromatisch gebundenen Isocyanatgruppen handelt.

In einer vierten Ausführungsform betrifft die Erfindung eine Polyisocyanatzubereitung nach einer der Ausführungsformen 1 bis 3, dadurch gekennzeichnet, dass die Polyisocyanatkomponente B) durch Modifizierung von PDI, HDI, IPDI, 4,4'-Diisocyanatodicyclohexylmethan, XDI, 2,4- und/oder 2,6-TDI hergestellt wurde.

In einer fünften Ausführungsform betrifft die Erfindung eine Polyisocyanatzubereitung nach einer der Ausführungsformen 1 bis 4, dadurch gekennzeichnet, dass die Polyisocyanatkomponente B) Isocyanuratgruppen enthaltende Polyisocyanate auf Basis von PDI, HDI und/oder IPDI und/oder Urethangruppen enthaltende TDI-Polyisocyanate, insbesondere monomerenarme Umsetzungsprodukte von 2,4- und/oder 2,6-TDI mit 1,1,1-Trimethylolpropan (TMP) und gegebenenfalls weiteren vorzugsweise niedermolekularen Alkoholen des Molekulargewichtsbereiches 62 bis 194 g/mol, wie z. B. Diethylenglykol, enthält.

In einer sechsten Ausführungsform betrifft die Erfindung eine Polyisocyanatzubereitung nach einer der Ausführungsformen 1 bis 5, dadurch gekennzeichnet, dass es sich bei den ionischen Emulgatoren C) um Umsetzungsprodukte von Polyisocyanatkomponenten B) mit organischen Verbindungen, die mindestens eine gegenüber Isocyanatgruppen reaktive Gruppe sowie mindestens eine Sulfonsäure- oder Sulfonatgruppe tragen, handelt.

In einer siebten Ausführungsform betrifft die Erfindung eine Polyisocyanatzubereitung nach einer der Ausführungsformen 1 bis 6, dadurch gekennzeichnet, dass es sich bei den ionischen Emulgatoren C) um Umsetzungsprodukte von Polyisocyanatkomponenten B) mit aminofunktionellen Sulfonsäuren der allgemeinen Formel (III) und/oder deren Salzen handelt, 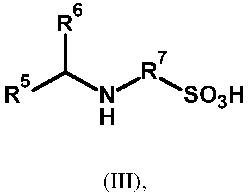 wobei in Formel (III) R⁵ und R⁶ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁵ und R⁶ auch in Kombination untereinander und gegebenenfalls einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁷ für einen linearen oder verzweigten aliphatischen Rest mit 2 bis 6 Kohlenstoffatomen steht.

In einer achten Ausführungsform betrifft die Erfindung eine Polyisocyanatzubereitung nach einer der Ausführungsformen 1 bis 7, dadurch gekennzeichnet, dass es sich bei den ionischen Emulgatoren C) um Umsetzungsprodukte von Polyisocyanatkomponenten B) mit 2-Isopropylaminoethan-1-sulfonsäure, 3-Isopropylaminopropan-1-sulfonsäure, 4-Isopropylaminobutan-1-sulfonsäure, 2-Cyclohexylaminoethan-1-sulfonsäure, 3-Cyclohexylaminopropan-1-sulfonsäure und/oder 4-Cyclohexylaminobutan-1-sulfonsäure und/oder deren Salzen handelt.

In einer neunten Ausführungsform betrifft die Erfindung eine Polyisocyanatzubereitung nach einer der Ausführungsformen 5 bis 8, dadurch gekennzeichnet, dass die Polyisocyanatkomponente A) mindestens 0,95 Gew.-%, besonders bevorzugt von 1,00 bis 3,00 Gew.-%, ganz besonders bevorzugt von 1,10 bis 1,80 Gew.-% an Sulfonatgruppen, berechnet als SO₃; Mol.-Gewicht = 80 g/mol, in chemisch gebundener Form enthält.

In einer zehnten Ausführungsform betrifft die Erfindung eine Polyisocyanatzubereitung nach einer der Ausführungsformen 1 bis 9, dadurch gekennzeichnet, dass die Lösemittelkomponente E) aus mindestens einem organischen Lösemittel besteht und einen Peroxid-Gehalt von höchstens 60 mg/l H₂O₂, besonders bevorzugt höchstens 50 mg/l H₂O₂, ganz besonders bevorzugt von 1 bis 30 mg/l H₂O₂, noch bevorzugter von 1 bis 25 mg/l H₂O₂ und insbesondere von 2 bis 10 mg/l H₂O₂ aufweist, wobei es sich bei diesen Werten um den mittleren Peroxidgehalt aller in der Lösemittelkomponente E) vorliegenden organischen Lösemittel handelt.

In einer elften Ausführungsform betrifft die Erfindung eine Polyisocyanatzubereitung nach einer der Ausführungsformen 1 bis 10, dadurch gekennzeichnet, dass die Polyisocyanatkomponente A) und die Lösemittelkomponente E) in solchen Mengen vorliegen, dass der berechnete Peroxid-Gehalt der Polyisocyanatzubereitung, bezogen auf die Summe aus A) und E), 1 bis 20 mg/l H₂O₂, bevorzugt 1 bis 18 mg/l H₂O₂, besonders bevorzugt 1 bis 15 mg/l H₂O₂ beträgt.

In einer zwölften Ausführungsform betrifft die Erfindung eine Polyisocyanatzubereitung nach einer der Ausführungsformen 1 bis 11, dadurch gekennzeichnet, dass der Anteil der Lösemittelkomponente E) an der Gesamtmenge der Komponenten A) und E) 5 bis 90 Gew.-%, vorzugsweise 10 bis 80 Gew.-%, besonders bevorzugt 15 bis 70 Gew.-% und ganz besonders bevorzugt 20 bis 60 Gew.-% beträgt.

In einer dreizehnten Ausführungsform betrifft die Erfindung die Verwendung der Polyisocyanatzubereitung gemäß einer der Ausführungsformen 1 bis 12 als Ausgangskomponente bei der Herstellung von Polyurethankunststoffen.

In einer vierzehnten Ausführungsform betrifft die Erfindung ein Beschichtungsmittel, enthaltend mindestens eine Polyisocyanatzubereitung gemäß einer der Ausführungsformen 1 bis 12.

In einer fünfzehnten Ausführungsform betrifft die Erfindung ein Substrat, beschichtet mit einem gegebenenfalls unter Wärmeeinwirkung ausgehärteten Beschichtungsmittel gemäß Ausführungsform 14.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Rest-Monomeren Gehalte wurden nach DIN EN ISO 10283:2007-11 gaschromatographisch mit internem Standard gemessen.

Die Messung der Farbzahlen (Hazen-Farbzahl nach DIN EN ISO 6271-2:2005-03, Iodfarbzahl nach DIN 6162:2014-09) erfolgte spektralphotometrisch mit einem LICO 690-Spektralcolorimeter der Fa. Hach Lange, DE.

Die Bestimmung des Peroxid-Gehaltes erfolgte mittels kommerziell verfügbarer Peroxid-Teststäbchen. Geeignete Teststäbchen sind beispielsweise MQuant^{®} Peroxid-Teststäbchen der Fa. Merck KgaA, Darmstadt, Deutschland oder Quantofix^{®} Peroxid-Teststäbchen der Fa. MACHEREY-NAGEL GmbH & Co. KG, Düren, Deutschland. Diesen Teststäbchen liegt als Reaktionsprinzip zugrunde, dass Peroxid-Sauerstoff enzymatisch mittels einer Peroxidase auf einen organischen Redoxindikator in der Reaktionszone übertragen wird, wobei ein gefärbtes Oxidationsprodukt entsteht. Die Peroxidkonzentration wird halbquantitativ durch visuelle Beurteilung der Reaktionszone des Teststäbchens mit den Feldern einer Farbskala ermittelt. Für verschieden Konzentrationsbereiche existieren verschiedene Teststäbchen mit unterschiedlich abgestuften Farbskalen. Teststäbchen der Merck-Artikelnummer 10011.0001. decken beispielsweise den Bereich 0,5 - 2 - 5 - 10 - 25 mg/L Peroxid ab, solche der Merck-Artikelnummer 1.10081.0001. den Bereich 1 - 3 - 10 - 30 - 100 mg/L Peroxid, solche der Merck-Artikelnummer 1.10337.0001. den Bereich 100 - 200 - 400 - 600 - 800 - 1000 mg/L Peroxid und Teststäbchen der Macherey-Nagel Artikelnummer REF 913 33 den Bereich 0 - 50 - 150 - 300 - 500 - 800 - 1000 mg/L Peroxid, wobei die Angabe Peroxid jeweils einem Wasserstoffperoxid-Äquivalent entspricht.

### Ausgangsverbindungen

### Lösemittelkomponenten E)

### Lösemittel E1)

### 1-Methoxypropyl-2-acetat (MPA)

5 1 Kunststoffgebinde, Lieferant: Azelis Deutschland GmbH (ehem. Kraemer & Martin GmbH), Sankt Augustin, Deutschland

| | |
|---|---|
| Qualität 1: | Peroxidgehalt ca. 3 mg/l H₂O₂-Äquivalente |
| Qualität 2: | Peroxidgehalt ca. 30 mg/l H₂O₂-Äquivalente |
| Qualität 3: | Peroxidgehalt ca. 50 mg/l H₂O₂-Äquivalente |
| Qualität 4: | Peroxidgehalt ca. 100 mg/l H₂O₂-Äquivalente |
| Qualität 5: | Peroxidgehalt ca. 150 mg/l H₂O₂-Äquivalente |

### Lösemittel E2)

### 3-Methoxy-n-butylacetat (Butoxyl)

500 ml Glasflasche, Lieferant: aber GmbH, Karlsruhe, Deutschland

| | |
|---|---|
| Qualität 1: | Peroxidgehalt ca. 3 mg/l H₂O₂-Äquivalente |
| Qualität 2: | Peroxidgehalt ca. 50 mg/l H₂O₂-Äquivalente |
| Qualität 3: | Peroxidgehalt ca. 60 mg/l H₂O₂-Äquivalente |
| Qualität 4: | Peroxidgehalt ca. 100 mg/l H₂O₂-Äquivalente |

### Lösemittel E3)

### Solventnaphta leicht

### 5 1 Kunststoffgebinde, Lieferant: Azelis Deutschland GmbH, Sankt Augustin, Deutschland

| | |
|---|---|
| Qualität 1: | Peroxidgehalt ca.3 mg/l H₂O₂-Äquivalente |
| Qualität 2: | Peroxidgehalt ca. 30 mg/l H₂O₂-Äquivalente |
| Qualität 3: | Peroxidgehalt ca. 50 mg/l H₂O₂-Äquivalente |
| Qualität 4: | Peroxidgehalt ca. 60 mg/l H₂O₂-Äquivalente |
| Qualität 5: | Peroxidgehalt ca. 150 mg/l H₂O₂-Äquivalente |

### Polyisocyanatkomponenten B)

### Polyisocyanatkomponente B1)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,7 % |
| NCO-Funktionalität: | 3,4 |
| Monomeres HDI: | 0,1 % |
| Viskosität (23°C): | 3080 mPas |
| Farbzahl (Hazen): | 18 |

### Polvisocvanatkomponente B2)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| NCO-Funktionalität: | 3,5 |
| monomeres PDI: | 0,09 % |
| Viskosität (23 °C): | 9850 mPas |
| Farbzahl (Hazen): | 34 |

### Polyisocyanatkomponente B3)

Urethangruppen enthaltendes TDI-Polyisocyanat, hergestellt in Anlehnung an Beispiel 4 der EP-A 0 546 399, mit der Änderung, dass eine Mischung aus 80 % 2,4-TDI und 20 % 2,6-TDI zum Einsatz kommt und das erhaltene blaßgelbe Harz 60 %ig in 1-Methoxypropyl-2-acetat (MPA, Peroxidgehalt 3 mg/l H₂O₂) gelöst wird.

| | |
|---|---|
| NCO-Gehalt: | 10,6 % |
| NCO-Funktionalität: | 3,3 |
| Monomeres 2,4-TDI: | 0,13 % |
| Monomeres 2,6-TDI: | 0,14 % |
| Viskosität (23°C): | 370 mPas |
| Farbzahl (Hazen): | 34 |

### Polyisocyanatkomponente A1)

### (Emulgatortyp C1))

943,9 g (4,88 val) der Polyisocyanatkomponente B1) wurden zusammen mit 36,0 g (0,16 val) 3-(Cyclohexylamino)-propansulfonsäure (CAPS), 20,1 g (0,16 mol) Dimethylcyclohexylamin und 0,05 g (50 ppm) 2,6-Di-tert-butyl-4-methylphenol unter trockenem Stickstoff 4:00 Stunden bei 100°C gerührt bis ein weitestgehend klares Sulfonatgruppen enthaltendes Polyisocyanatgemisch vorlag. Nach Abkühlen auf Raumtemperatur und Filtration über eine Filterschicht T 5500 (Fa. Seitz) wurden folgende Kenndaten ermittelt:

| | |
|---|---|
| NCO-Gehalt: | 19,8 % |
| NCO-Funktionalität: | 3,3 |
| Viskosität (23 °C): | 8210 mPas |
| Farbzahl (Hazen): | 18 |

### Polyisocyanatkomponente A2)

### (Emulgatortyp C2))

890 g (4,60 val) der Polyisocyanatkomponente B1) wurden 12 Stunden bei 80°C mit 110 g eines Emulgatorgemisches, bestehend aus 97 g eines ethoxylierten Tridecylalkoholphosphats (Rhodafac^{®} RS-710, Fa. Solvay) und 13 g Dimethylcyclohexylamin als Neutralisationsamin, gerührt. Nach Abkühlen auf Raumtemperatur liegt ein klares Polyisocyanatgemisch mit folgenden Kenndaten vor:

| | |
|---|---|
| NCO-Gehalt: | 19,3 % |
| NCO-Funktionalität: | 3,5 |
| Viskosität (23 °C): | 9200 mPas |
| Farbzahl (Hazen): | 33 |

### Polyisocyanatkomponente A3)

### (Emulgatortyp C1))

960,7 g (4,98 val) der Polyisocyanatkomponente B2) wurden zusammen mit 25,0 g (0,11 val) 3-(Cyclohexylamino)-propansulfonsäure (CAPS), 14,3 g (0,11 mol) Dimethylcyclohexylamin und 0,05 g (50 ppm) 2,6-Di-tert-butyl-4-methylphenol unter trockenem Stickstoff 3:30 Stunden bei 100°C gerührt bis ein weitestgehend klares Sulfonatgruppen enthaltendes Polyisocyanatgemisch vorlag. Nach Abkühlen auf Raumtemperatur und Filtration über eine Filterschicht T 5500 (Fa. Seitz) wurden folgende Kenndaten ermittelt:

| | |
|---|---|
| NCO-Gehalt: | 20,5 % |
| NCO-Funktionalität: | 3,3 |
| Viskosität (23 °C): | 4050 mPas |
| Farbzahl (Hazen): | 18 |

### Polyisocyanatkomponente A4)

### (Emulgatortyp C1))

700 g (2,88 val) der hydrophilen Polyisocyanatkomponente A1) wurden mit 300 g (0,76 val) der Polyisocyanatkomponente B3) bei 30°C gemischt und durch 30 minütiges Rühren homogenisiert. Es wurde ein gemischt aliphatisch/aromatisches Polyisocyanat mit folgenden Kenndaten erhalten:

| | |
|---|---|
| NCO-Gehalt: | 15,2 % |
| NCO-Funktionalität: | 3,2 |
| Festkörpergehalt: | 88 % |
| Viskosität (23 °C): | 6800 mPas |
| Farbzahl (Hazen): | 29 |

### Polyisocyanatkomponente A5)

### (Emulgatortyp C1) und D1))

900,0 g (4,65 val) der Polyisocyanatkomponente B1) wurden zusammen mit 30,0 g (0,14 val) 3-(Cyclohexylamino)-propansulfonsäure (CAPS), 17,8 g (0,14 mol) Dimethylcyclohexylamin, 52,2 g (0,10 mol) eines auf Methanol gestarteten, monofunktionellen Polyethylenoxidpolyethers eines mittleren Molekulargewichtes von 500 und 0,05 g (50 ppm) 2,6-Di-tert-butyl-4-methylphenol unter trockenem Stickstoff 6:00 Stunden bei 100°C gerührt bis ein klares Sulfonatgruppen und Polyethereinheiten enthaltendes Polyisocyanatgemisch vorlag. Nach Abkühlen auf Raumtemperatur und Filtration über eine Filterschicht T 5500 (Fa. Seitz) wurden folgende Kenndaten ermittelt:

| | |
|---|---|
| NCO-Gehalt: | 18,5 % |
| NCO-Funktionalität: | 3,2 |
| Viskosität (23 °C): | 4660 mPas |
| Farbzahl (Hazen): | 12 |

### Vergleichspolyisocyanat A6)

### (Emulgatortyp D1))

870 g (4,50 val) der Polyisocyanatkomponente B1) wurden bei 100 °C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf einen Wert von 17,4 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,4 % |
| NCO-Funktionalität: | 3,2 |
| Viskosität (23 °C): | 2960 mPas |
| Farbzahl (Hazen): | 26 |

### Polyisocyanatzubereitungen 1 bis 14 (erfindungsgemäß und Vergleich)

Jeweils 100 Gew.-Teile der Polyisocyanatkomponente A4) wurden bei Raumtemperatur mit jeweils 46,7 g unterschiedlicher Qualitäten der Lösemittel E1) bis E3) gemischt und durch 30 minütiges Rühren homogenisiert.

Die Tabellen 1 bis 3 zeigen die Farbzahlen der erhaltenen 60 %igen Polyisocyanatzubereitungen in Abhängigkeit vom Peroxidgehalt des jeweiligen Lösemittels und dem der Polyisocyanatlösung nach einer Lagerung von 24 Stunden bei Raumtemperatur.

**Tabelle 1: Polyisocyanatzubereitungen mit 1-Methoxypropyl-2-acetat (Lösemittel E1))**

| Polyisocyanatzubereitung | | 1 | 2 | 3 | 4 Vergleich | 5 Vergleich |
|---|---|---|---|---|---|---|
| Polyisocyanatkomponente | | A4) | A4) | A4) | A4) | A4) |
| Lösemittel E1), Qualität | | 1 | 2 | 3 | 4 | 5 |
| | | | | | | |
| Peroxidgehalt Lösemittel E1) | [mg/l H₂O₂] | 3 | 30 | 50 | 100 | 150 |
| Peroxidgehalt Lösemittel gesamt^{*)} | [mg/l H₂O₂] | 3 | 24 | 40 | 80 | 120 |
| Peroxidgehalt Polyisocyanatlösung^{*)} | [mg/l H₂O₂] | 1 | 10 | 16 | 32 | 48 |
| | | | | | | |
| Farbzahl nach 24 h / 25°C | Hazen | 22 | 25 | 45 | 893 | >1000 |
| | Iod | 0,1 | 0,1 | 0,2 | 5,3 | 9,5 |

| | | | | | | |
|---|---|---|---|---|---|---|
| *) berechneter Wert | | | | | | |

**Tabelle 2: Polyisocyanatzubereitungen mit 3-Methoxy-n-butylacetat (Lösemittel E2))**

| Polyisocyanatzubereitung | | 6 | 7 | 8 | 9 Vergleich |
|---|---|---|---|---|---|
| Polyisocyanatkomponente | | A4) | A4) | A4) | A4) |
| Lösemittel E2), Qualität | | 1 | 2 | 3 | 4 |
| | | | | | |
| Peroxidgehalt Lösemittel E2) | [mg/l H₂O₂] | 3 | 50 | 60 | 100 |
| Peroxidgehalt Lösemittel gesamt^{*)} | [mg/l H₂O₂] | 3 | 40 | 48 | 80 |
| Peroxidgehalt Polyisocyanatlösung^{*)} | [mg/l H₂O₂] | 1 | 16 | 19 | 32 |
| | | | | | |
| Farbzahl nach 24 h / 25°C | Hazen | 24 | 48 | 51 | 914 |
| | Iod | 0,1 | 0,2 | 0,2 | 5,5 |

| | | | | | |
|---|---|---|---|---|---|
| ^{*)} berechneter Wert | | | | | |

**Tabelle 3: Polyisocyanatzubereitungen mit Solventnaphtha 100 (Lösemittel E3))**

| Polyisocyanatzubereitung | | 10 | 11 | 12 | 13 | 14 Vergleich |
|---|---|---|---|---|---|---|
| Polyisocyanatkomponente | | A4) | A4) | A4) | A4) | A4) |
| Lösemittel E3), Qualität | | 1 | 2 | 3 | 4 | 5 |
| | | | | | | |
| Peroxidgehalt Lösemittel E1) | [mg/l H₂O₂] | 3 | 30 | 50 | 60 | 150 |
| Peroxidgehalt Lösemittel gesamt^{*)} | [mg/l H₂O₂] | 3 | 24 | 40 | 48 | 120 |
| Peroxidgehalt Polyisocyanatlösung^{*)} | [mg/l H₂O₂] | 1 | 10 | 16 | 19 | 48 |
| | | | | | | |
| Farbzahl nach 24 h / 25°C | Hazen | 24 | 28 | 50 | 58 | >1000 |
| | Iod | 0,1 | 0,1 | 0,2 | 0,3 | 12,1 |

| | | | | | | |
|---|---|---|---|---|---|---|
| *) berechneter Wert | | | | | | |

### Polyisocyanatzubereitungen 15 bis 25 (erfindungsgemäß und Vergleich)

Jeweils 100 Gew.-Teile der Polyisocyanatkomponenten A1), A2), A3) und A5) wurden bei Raumtemperatur mit jeweils 42,8 g unterschiedlicher Qualitäten der Lösemittel E1) bis E3) gemischt und durch 30 minütiges Rühren homogenisiert.

Tabelle 4 zeigt die Farbzahlen der erhaltenen 70 %igen Polyisocyanatzubereitungen in Abhängigkeit vom Peroxidgehalt des jeweiligen Lösemittels und dem der Polyisocyanatlösung nach einer Lagerung von 5 Tagen bei 50°C.

### Polyisocyanatzubereitungen 16 bis 34 (erfindungsgemäß und Vergleich)

Polyisocyanatkomponente A1) wurde bei Raumtemperatur mit unterschiedlichen Mengen unterschiedlicher Qualitäten des Lösemittels E1) gemischt und durch 30 minütiges Rühren homogenisiert.

Tabelle 5 zeigt die Zusammensetzungen und Feststoffgehalte der erhaltenen Polyisocyanatzubereitungen sowie ihre Farbzahlen in Abhängigkeit vom Peroxidgehalt des Lösemittels und dem der Polyisocyanatlösung nach einer Lagerung von 5 Tagen bei 50°C.

**Tabelle 4: Polyisocyanatzubereitungen 15 bis 25**

| Polyisocyanatzubereitung | | 15 | 16 Vergleich | 17 | 18 | 19 Vergleich | 20 | 21 Vergleich | 22 | 23 Vergleich | 24 | 25 Vergleich |
|---|---|---|---|---|---|---|---|---|---|---|---|---|
| | | | | | | | | | | | | |
| Polyisocyanatkomponente | | A1) | A1) | A1) | A1) | A1) | A2) | A2) | A3) | A3) | A5) | A5) |
| Lösemittel E1), Qualität | | 3 | 4 | - | - | - | - | - | 3 | 4 | 3 | 4 |
| Lösemittel E2), Qualität | | - | - | - | - | - | 3 | 4 | - | - | - | - |
| Lösemittel E3), Qualität | | - | - | 3 | 4 | 5 | - | - | - | - | - | - |
| | | | | | | | | | | | | |
| Peroxidgehalt Lösemittel | [mg/l H₂O₂] | 50 | 100 | 50 | 60 | 150 | 60 | 100 | 50 | 100 | 50 | 100 |
| Peroxidgehalt Polyisocyanatlösung^{*)} | [mg/l H₂O₂] | 15 | 30 | 15 | 18 | 45 | 18 | 30 | 15 | 30 | 15 | 30 |
| | | | | | | | | | | | | |
| Farbzahl nach 5 d / 50°C | Hazen | 14 | 107 | 17 | 20 | 216 | 29 | 128 | 20 | 138 | 18 | 112 |
| | Iod | 0 | 0,5 | 0 | 0 | 1,2 | 0,1 | 0,7 | 0 | 0,7 | 0 | 0,6 |

| | | | | | | | | | | | | |
|---|---|---|---|---|---|---|---|---|---|---|---|---|
| ^{*)} berechneter Wert | | | | | | | | | | | | |

**Tabelle 5: Polyisocyanatzubereitungen 26 bis 34**

| Polyisocyanatzubereitung | | 26 | 27 | 28 | 30 | 31 Vergleich | 32 | 33 | 34 Vergleich |
|---|---|---|---|---|---|---|---|---|---|
| | | | | | | | | | |
| Polyisocyanatkomponente A1) | [Gew.-Teile] | 70 | 60 | 50 | 40 | 30 | 70 | 60 | 50 |
| Lösemittel E1), Qualität 3 | [Gew.-Teile] | - | - | - | - | - | 30 | 40 | 50 |
| Lösemittel E1), Qualität 2 | [Gew.-Teile] | 30 | 40 | 50 | 60 | 70 | - | - | - |
| | | | | | | | | | |
| Feststoffgehalt | [%] | 70 | 60 | 50 | 40 | 30 | 70 | 60 | 50 |
| | | | | | | | | | |
| Peroxidgehalt Lösemittel | [mg/l H₂O₂] | 30 | 30 | 30 | 30 | 30 | 50 | 50 | 50 |
| Peroxidgehalt Polyisocyanatlösung^{*)} | [mg/l H₂O₂] | 9 | 12 | 15 | 18 | 21 | 15 | 20 | 25 |
| | | | | | | | | | |
| Farbzahl nach 5 d / 50°C | Hazen | 9 | 12 | 15 | 28 | 65 | 14 | 34 | 83 |
| | Iod | 0 | 0 | 0 | 0,1 | 0,3 | 0 | 0,1 | 0,4 |

| | | | | | | | | | |
|---|---|---|---|---|---|---|---|---|---|
| *)berechneter Wert | | | | | | | | | |

### Polyisocvanatzubereitung 35 (Vergleich)

100 Gew.-Teile der Polyisocyanatkomponente A6) wurden bei Raumtemperatur mit 42,8 g des Lösemittels D1), Qualität 4 (100 mg/l H₂O₂) gemischt und durch 30 minütiges Rühren homogenisiert. Die Farbzahl der erhalten 70 %igen Lösung betrug unmittelbar nach dem Vermischen 17 Hazen, nach einer Lagerdauer von 5 Tagen bei 50°C 14 Hazen.

Der Vergleich zeigt, dass das Verdünnen eines ausschließlich nichtionisch hydrophilierten Polyisocyanats mit einem peroxid-haltigen Lösemittel nicht zu einem Anstieg der Farbzahl über die Zeit führt, sondern einen aufhellenden Effekt hat.

## Patentansprüche

1. Polyisocyanatzubereitung, enthaltend mindestens eine, mit mindestens einem ionischen Emulgator hydrophil modifizierte Polyisocyanatkomponente A) und eine Lösemittelkomponente E), die aus mindestens einem organischen Lösemittel besteht, **dadurch gekennzeichnet, dass** die Lösemittelkomponente E) einen Gehalt an Peroxiden von höchstens 70 mg/l H₂O₂-Äquivalenten aufweist, wobei es sich bei diesem Wert um den mittleren Peroxidgehalt aller in der Lösemittelkomponente E) vorliegenden organischen Lösemittel handelt, und die Polyisocyanatkomponente A) und die Lösemittelkomponente E) in solchen Mengen vorliegen, dass der berechnete Peroxid-Gehalt der Polyisocyanatzubereitung, bezogen auf die Summe aus A) und E), höchstens 20 mg/l H₂O₂ beträgt.

2. Polyisocyanatzubereitung gemäß Anspruch 1, **dadurch gekennzeichnet, dass** die hydrophil modifizierte Polyisocyanatkomponente A) aus einer Polyisocyanatkomponente B) sowie mindestens einem ionischen Emulgator C) besteht.

3. Polyisocyanatzubereitung gemäß Anspruch 1 oder 2, **dadurch gekennzeichnet, dass** es sich bei der Polyisocyanatkomponente B) um beliebige Diisocyanate, Triisocyanate und/oder Polyisocyanate mit aliphatisch, cycloaliphatisch, araliphatisch und/oder aromatisch gebundenen Isocyanatgruppen handelt.

4. Polyisocyanatzubereitung gemäß einem der Ansprüche 1 bis 3, **dadurch gekennzeichnet, dass** die Polyisocyanatkomponente B) durch Modifizierung von PDI, HDI, IPDI, 4,4'-Diisocyanatodicyclohexylmethan, XDI, 2,4- und/oder 2,6-TDI hergestellt wurde.

5. Polyisocyanatzubereitung gemäß einem der Ansprüche 1 bis 4, **dadurch gekennzeichnet, dass** die Polyisocyanatkomponente B) Isocyanuratgruppen enthaltende Polyisocyanate auf Basis von PDI, HDI und/oder IPDI und/oder Urethangruppen enthaltende TDI-Polyisocyanate, insbesondere monomerenarme Umsetzungsprodukte von 2,4- und/oder 2,6-TDI mit 1,1,1-Trimethylolpropan (TMP) und gegebenenfalls weiteren vorzugsweise niedermolekularen Alkoholen des Molekulargewichtsbereiches 62 bis 194 g/mol, wie z. B. Diethylenglykol, enthält.

6. Polyisocyanatzubereitung gemäß einem der Ansprüche 1 bis 5, **dadurch gekennzeichnet, dass** es sich bei den ionischen Emulgatoren C) um Umsetzungsprodukte von Polyisocyanatkomponenten B) mit organischen Verbindungen, die mindestens eine gegenüber Isocyanatgruppen reaktive Gruppe sowie mindestens eine Sulfonsäure- oder Sulfonatgruppe tragen, handelt.

7. Polyisocyanatzubereitung gemäß einem der Ansprüche 1 bis 6, **dadurch gekennzeichnet, dass** es sich bei den ionischen Emulgatoren C) um Umsetzungsprodukte von Polyisocyanatkomponenten B) mit aminofunktionellen Sulfonsäuren der allgemeinen Formel (III) und/oder deren Salzen handelt, 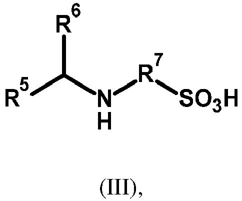 wobei in Formel (III) R⁵ und R⁶ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁵ und R⁶ auch in Kombination untereinander und gegebenenfalls einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁷ für einen linearen oder verzweigten aliphatischen Rest mit 2 bis 6 Kohlenstoffatomen steht.

8. Polyisocyanatzubereitung gemäß einem der Ansprüche 1 bis 7, **dadurch gekennzeichnet, dass** es sich bei den ionischen Emulgatoren C) um Umsetzungsprodukte von Polyisocyanatkomponenten B) mit 2-Isopropylaminoethan-1-sulfonsäure, 3-Isopropylaminopropan-1-sulfonsäure, 4-Isopropylaminobutan-1-sulfonsäure, 2-Cyclohexylaminoethan-1-sulfonsäure, 3-Cyclohexylaminopropan-1-sulfonsäure und/oder 4-Cyclohexylaminobutan-1-sulfonsäure und/oder deren Salzen handelt.

9. Polyisocyanatzubereitung gemäß einem der Ansprüche 5 bis 8, **dadurch gekennzeichnet, dass** die Polyisocyanatkomponente A) mindestens 0,95 Gew.-%, besonders bevorzugt von 1,00 bis 3,00 Gew.-%, ganz besonders bevorzugt von 1,10 bis 1,80 Gew.-% an Sulfonatgruppen, berechnet als SO₃; Mol.-Gewicht = 80 g/mol, in chemisch gebundener Form enthält.

10. Polyisocyanatzubereitung gemäß einem der Ansprüche 1 bis 9, **dadurch gekennzeichnet, dass** die Lösemittelkomponente E) aus mindestens einem organischen Lösemittel besteht und einen Peroxid-Gehalt von höchstens 60 mg/l H₂O₂, besonders bevorzugt höchstens 50 mg/l H₂O₂, ganz besonders bevorzugt von 1 bis 30 mg/l H₂O₂, noch bevorzugter von 1 bis 25 mg/l H₂O₂ und insbesondere von 2 bis 10 mg/l H₂O₂ anfweist wobei es sich bei diesen Werten um den mittleren Peroxidgehalt aller in der Lösemittelkomponente E) vorliegenden organischen Lösemittel handelt.

11. Polyisocyanatzubereitung gemäß einem der Ansprüche 1 bis 10, **dadurch gekennzeichnet, dass** die Polyisocyanatkomponente A) und die Lösemittelkomponente E) in solchen Mengen vorliegen, dass der berechnete Peroxid-Gehalt der Polyisocyanatzubereitung, bezogen auf die Summe aus A) und E), 1 bis 20 mg/l H₂O₂, bevorzugt 1 bis 18 mg/l H₂O₂, besonders bevorzugt 1 bis 15 mg/l H₂O₂ beträgt.

12. Polyisocyanatzubereitung gemäß einem der Ansprüche 1 bis 11, **dadurch gekennzeichnet, dass** der Anteil der Lösemittelkomponente E) an der Gesamtmenge der Komponenten A) und E) 5 bis 90 Gew.-%, vorzugsweise 10 bis 80 Gew.-%, besonders bevorzugt 15 bis 70 Gew.-% und ganz besonders bevorzugt 20 bis 60 Gew.-% beträgt.

13. Verwendung der Polyisocyanatzubereitung gemäß einem der Ansprüche 1 bis 12 als Ausgangskomponente bei der Herstellung von Polyurethankunststoffen.

14. Beschichtungsmittel, enthaltend mindestens eine Polyisocyanatzubereitung gemäß einem der Ansprüche 1 bis 12.

15. Substrat, beschichtet mit einem gegebenenfalls unter Wärmeeinwirkung ausgehärteten Beschichtungsmittel gemäß Anspruch 14.

## Claims

1. Polyisocyanate preparation comprising at least one polyisocyanate component A) hydrophilically modified with at least one ionic emulsifier and a solvent component E) consisting of at least one organic solvent, **characterized in that** the solvent component E) has a peroxide content of at most 70 mg/l H₂O₂ equivalents, wherein this value is the average peroxide content of all organic solvents present in the solvent component E), and the polyisocyanate component A) and the solvent component E) are present in amounts such that the calculated peroxide content of the polyisocyanate preparation is at most 20 mg/l H₂O₂, based on the sum of A) and E) .

2. Polyisocyanate preparation according to Claim 1, **characterized in that** the hydrophilically modified polyisocyanate component A) consists of a polyisocyanate component B) and at least one ionic emulsifier C).

3. Polyisocyanate preparation according to Claim 1 or 2, **characterized in that** the polyisocyanate component B) is any diisocyanates, triisocyanates and/or polyisocyanates having aliphatically, cycloaliphatically, araliphatically and/or aromatically bonded isocyanate groups.

4. Polyisocyanate preparation according to any of Claims 1 to 3, **characterized in that** the polyisocyanate component B) was prepared by modifying PDI, HDI, IPDI, 4,4'-diisocyanatodicyclohexylmethane, XDI, 2,4- and/or 2,6-TDI.

5. Polyisocyanate preparation according to any of Claims 1 to 4, **characterized in that** the polyisocyanate component B) comprises isocyanurate group-containing polyisocyanates based on PDI, HDI and/or IPDI and/or urethane group-containing TDI polyisocyanates, in particular low-monomer reaction products of 2,4- and/or 2,6-TDI with 1,1,1-trimethylolpropane (TMP) and optionally further preferably low molecular weight alcohols in the molecular weight range from 62 to 194 g/mol, such as diethylene glycol for example.

6. Polyisocyanate preparation according to any of Claims 1 to 5, **characterized in that** the ionic emulsifiers C) are reaction products of polyisocyanate components B) with organic compounds bearing at least one isocyanate-reactive group and at least one sulfonic acid or sulfonate group.

7. Polyisocyanate preparation according to any of Claims 1 to 6, **characterized in that** the ionic emulsifiers C) are reaction products of polyisocyanate components B) with amino-functional sulfonic acids of the general formula (III) and/or salts thereof, 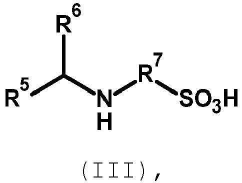 wherein in formula (III) R⁵ and R⁶ are each independently identical or different radicals and are hydrogen or saturated or unsaturated, linear or branched, aliphatic or cycloaliphatic or aromatic organic radicals having 1 to 18 carbon atoms, which are substituted or unsubstituted and/or comprise heteroatoms in the chain, wherein R⁵ and R⁶, in combination with each other and optionally one further nitrogen atom or one oxygen atom, may also form cycloaliphatic or heterocyclic rings having 3 to 8 carbon atoms, which may optionally be further substituted, and R⁷ is a linear or branched aliphatic radical having 2 to 6 carbon atoms.

8. Polyisocyanate preparation according to any of Claims 1 to 7, **characterized in that** the ionic emulsifiers C) are reaction products of polyisocyanate components B) with 2-isopropylaminoethane-1-sulfonic acid, 3-isopropylaminopropane-1-sulfonic acid, 4-isopropylaminobutane-1-sulfonic acid, 2-cyclohexylaminoethane-1-sulfonic acid, 3-cyclohexylaminopropane-1-sulfonic acid and/or 4-cyclohexylaminobutane-1-sulfonic acid and/or salts thereof.

9. Polyisocyanate preparation according to any of Claims 5 to 8, **characterized in that** the polyisocyanate component A) comprises at least 0.95% by weight, particularly preferably from 1.00 to 3.00% by weight, especially preferably from 1.10 to 1.80% by weight of sulfonate groups, calculated as SO₃; molar weight = 80 g/mol, in chemically bonded form.

10. Polyisocyanate preparation according to any of Claims 1 to 9, **characterized in that** the solvent component E) consists of at least one organic solvent and has a peroxide content of at most 60 mg/l H₂O₂, particularly preferably at most 50 mg/l H₂O₂, especially preferably from 1 to 30 mg/l H₂O₂, even more preferably from 1 to 25 mg/l H₂O₂ and especially from 2 to 10 mg/l H₂O₂, wherein these values are the average peroxide content of all organic solvents present in the solvent component E).

11. Polyisocyanate preparation according to any of Claims 1 to 10, **characterized in that** the polyisocyanate component A) and the solvent component E) are present in amounts such that the calculated peroxide content of the polyisocyanate preparation, based on the sum of A) and E), is 1 to 20 mg/l H₂O₂, preferably 1 to 18 mg/l H₂O₂, particularly preferably 1 to 15 mg/l H₂O₂.

12. Polyisocyanate preparation according to any of Claims 1 to 11, **characterized in that** the proportion of the solvent component E) is 5 to 90% by weight, preferably 10 to 80% by weight, particularly preferably 15 to 70% by weight and especially preferably 20 to 60% by weight, of the total amount of the components A) and E).

13. Use of the polyisocyanate preparation according to any of Claims 1 to 12 as a starting component in the production of polyurethane plastics.

14. Coating composition comprising at least one polyisocyanate preparation according to any of Claims 1 to 12.

15. Substrate coated with an optionally heat-cured coating composition according to Claim 14.

## Revendications

1. Préparation de polyisocyanate, contenant au moins un composant polyisocyanate A), modifié de manière hydrophile par au moins un émulsifiant ionique, et un composant solvant E), qui est constitué par au moins un solvant organique, **caractérisée en ce que** le composant solvant E) présente une teneur en peroxydes d'au plus 70 mg/l d'équivalents H₂O₂, cette valeur représentant la teneur moyenne en peroxydes de tous les solvants organiques se trouvant dans le composant solvant E), et le composant polyisocyanate A) et le composant solvant E) se trouvant en des quantités telles que la teneur calculée en peroxydes de la préparation de polyisocyanate, par rapport à la somme de A) et B), est d'au plus 20 mg/l de H₂O₂.

2. Préparation de polyisocyanate selon la revendication 1, **caractérisée en ce que** le composant polyisocyanate A) modifié de manière hydrophile est constitué par un composant polyisocyanate B) ainsi que par au moins un émulsifiant ionique C).

3. Préparation de polyisocyanate selon la revendication 1 ou 2, **caractérisée en ce qu'**il s'agit, pour le composant polyisocyanate B), de diisocyanates, de triisocyanates et/ou de polyisocyanates quelconques présentant des groupes isocyanate liés de manière aliphatique, cycloaliphatique, araliphatique et/ou aromatique.

4. Préparation de polyisocyanate selon l'une des revendications 1 à 3, **caractérisée en ce que** le composant polyisocyanate B) a été préparé par modification de PDI, de HDI, d'IPDI, de 4,4'-diisocyanatodicyclohexylméthane, de XDI, de 2,4-TDI et/ou de 2,6-TDI.

5. Préparation de polyisocyanate selon l'une des revendications 1 à 4, **caractérisée en ce que** le composant polyisocyanate B) contient des polyisocyanates contenant des groupes isocyanurate à base de polyisocyanates de TDI contenant des groupes PDI, HDI et/ou IPDI et/ou uréthane, en particulier des produits de transformation, pauvres en monomères, de 2,4-TDI et/ou de 2,6-TDI avec du 1,1,1-triméthylolpropane (TMP) et le cas échéant d'autres alcools de préférence de bas poids moléculaire, de la plage de poids moléculaires de 62 à 194 g/mole, comme par exemple le diéthylèneglycol.

6. Préparation de polyisocyanate selon l'une des revendications 1 à 5, **caractérisée en ce qu'**il s'agit, pour les émulsifiants ioniques C), de produits de transformation de composants de polyisocyanate B) avec des composés organiques qui portent au moins un groupe réactif vis-à-vis des groupes isocyanate ainsi qu'au moins un groupe acide sulfonique ou sulfonate.

7. Préparation de polyisocyanate selon l'une des revendications 1 à 6, **caractérisée en ce qu'**il s'agit, pour les émulsifiants ioniques C), de produits de transformation de composants de polyisocyanate B) avec des acides sulfoniques à fonctionnalité amino de la formule générale (III) et/ou leurs sels. 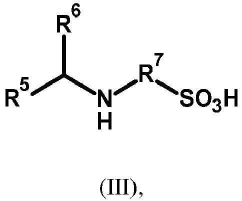 où, dans la formule (III), R⁵ et R⁶ représentent, indépendamment l'un de l'autre, des radicaux identiques ou différents et représentent hydrogène ou des radicaux organiques saturés ou insaturés, aliphatiques, linéaires ou ramifiés, ou cycloaliphatiques ou aromatiques, comprenant 1 à 18 atomes de carbone, qui sont substitués ou non substitués et/ou qui présentent des hétéroatomes dans la chaîne, R⁵ et R⁶ pouvant également former, en combinaison l'un avec l'autre et le cas échéant avec un autre atome d'azote ou un atome d'oxygène, des cycles cycloaliphatiques ou hétérocycliques comprenant 3 à 8 atomes de carbone, qui peuvent le cas échéant être substitués davantage, et R⁷ représente un radical aliphatique linéaire ou ramifié comprenant 2 à 6 atomes de carbone.

8. Préparation de polyisocyanate selon l'une des revendications 1 à 7, **caractérisée en ce qu'**il s'agit, pour les émulsifiants ioniques C), de produits de transformation de composants polyisocyanate B) avec de l'acide 2-isopropylaminoéthane-1-sulfonique, de l'acide 3-isopropylaminopropane-1-sulfonique, de l'acide 4-isopropylaminobutane-1-sulfonique, de l'acide 2-cyclohexylaminoéthane-1-sulfonique, de l'acide 3-cyclohexylaminopropane-1-sulfonique et/ou de l'acide 4-cyclohexylaminobutane-1-sulfonique et/ou leurs sels.

9. Préparation de polyisocyanate selon l'une des revendications 5 à 8, **caractérisée en ce que** le composant polyisocyanate A) contient au moins 0,95% en poids, de manière particulièrement préférée 1,00 à 3,00% en poids, de manière tout particulièrement préférée 1,10 à 1,80% en poids de groupes sulfonate, calculés sous forme de SO₃ ; poids molaire = 80 g/mole, sous forme chimiquement liée.

10. Préparation de polyisocyanate selon l'une des revendications 1 à 9, **caractérisée en ce que** le composant solvant E) est constitué par au moins un solvant organique et présente une teneur en peroxydes d'au plus 60 mg/l de H₂O₂, de manière particulièrement préférée d'au plus 50 mg/l de H₂O₂, de manière tout particulièrement préférée de 1 à 30 mg/l de H₂O₂, encore plus préférablement de 1 à 25 mg/l de H₂O₂ et en particulier de 2 à 10 mg/l de H₂O₂, ces valeurs représentant la teneur moyenne en peroxydes de tous les solvants organiques se trouvant dans composant solvant E).

11. Préparation de polyisocyanate selon l'une des revendications 1 à 10, **caractérisée en ce que** le composant polyisocyanate A) et le composant solvant E) se trouvent en des quantités telles que la teneur calculée en peroxydes de la préparation de polyisocyanate, par rapport à la somme de A) et E), est de 1 à 20 mg/l de H₂O₂, de préférence de 1 à 18 mg/l de H₂O₂, de manière particulièrement préférée de 1 à 15 mg/l de H₂O₂.

12. Préparation de polyisocyanate selon l'une des revendications 1 à 11, **caractérisée en ce que** la proportion du composant solvant E) par rapport à la quantité totale des composants A) et E) est de 5 à 90% en poids, de préférence de 10 à 80% en poids, de manière particulièrement préférée de 15 à 70% en poids et de manière tout particulièrement préférée de 20 à 60% en poids.

13. Utilisation de la préparation de polyisocyanate selon l'une quelconque des revendications 1 à 12 comme composant de départ lors de la préparation de matériaux synthétiques à base de polyuréthane.

14. Agent de revêtement contenant au moins une préparation de polyisocyanate selon l'une des revendications 1 à 12.

15. Substrat revêtu par un agent de revêtement selon la revendication 14, le cas échéant durci sous l'effet de la chaleur.
